# EUROPEAN PATENT SPECIFICATION

(11) **EP 2 495 159 B1**
(45) Date of publication and mention of the grant of the patent: **04.11.2015**
(21) Application number: 12157475.0
(22) Date of filing: 29.02.2012
(51) Int. Cl.: B62L 1/16

(54) **Bicycle brake assembly**
Fahrradbremsanordnung
Ensemble de frein de bicyclette

(30) Priority: 01.07.2011 US 201113175731; 01.07.2011 US 201113175717; 01.07.2011 US 201113175687; 04.03.2011 US 201113041030; 04.03.2011 US 201113040930; 17.10.2011 JP 2011228355
(43) Date of publication of application: 05.09.2012
(73) Proprietor: Shimano Inc., Sakai City, Osaka 590-8577 (JP)
(72) Inventor: Nago, Daisuke, Osaka, Osaka 590-8577 (JP); Kariyama, Osamu, Osaka, Osaka 590-8577 (JP); Matsushita, Tatsuya, Osaka, Osaka 590-8577 (JP); Nakakura, Masahiro, Osaka, Osaka 590-8577 (JP); Terada, Takefumi, Osaka, Osaka 590-8577 (JP)
(74) Representative: Sonnenberg, Fred

(56) References cited:
- EP-A1- 0 260 819
- EP-A1- 0 347 559
- EP-A1- 2 444 310
- CN-Y- 201 169 355
- CN-Y- 201 189 931
- DE-A1- 2 800 364
- GB-A- 607 403
- GB-A- 2 145 484
- TW-B- I 270 500
- TW-U- M 360 201
- US-A- 3 314 504
- US-A- 5 188 200
- US-A- 5 425 434
- US-A1- 2006 113 151
- US-A1- 2009 038 894

## Description

### CROSS REFERENCE TO RELATED APPLICATIONS

This application claims priority to Japanese Patent Application JP 2011-228355, filed on 17 October 2011, US Patent Application No. 13/040,930 filed on 4 March 2011, US Patent Application No. 13/041,030 filed on 4 March 2011, US Patent Application No. 13/175,687 filed on 1 July 2011, US Patent Application No. 13/175,717 filed on 1 July 2011 and US Patent Application No. 13/175,731 filed on 1 July 2011..

### BACKGROUND OF THE INVENTION

The present invention is directed to bicycle brakes and, more particularly, to a kind of two lever brake wherein both levers are manipulated, preferably synchronized. Such kind of brakes may e.g. be referred to as a side-pull style bicycle brake for a bicycle, a center-pull style bicycle brake for a bicycle or as a hydraulic rim brake for a bicycle.

As a first kind of a bicycle braking device, a so-called side-pull type caliper brake is known. The caliper brake includes a first brake arm and a second brake arm mountable to a bicycle frame, for example. The first brake arm has a first mounting portion pivotally mountable to the frame, a first brake shoe mounting portion, and a first cable mounting portion. The second brake arm has a second mounting portion pivotally mountable to the frame at the same position as the first mounting portion, a second brake shoe mounting portion, and a first cable mounting portion. The first brake shoe mounting portion and the second brake shoe mounting portion are disposed so as to oppose each other.

Also, as a side-pull type caliper-type braking device, a so-called dual-pivot type braking device in which a first brake arm and a second brake arm pivot around different axles is known (for example, see Japanese Patent Laid-Open No. 09-267787).

In such a conventional braking device as described above, an outer cable and an inner cable of a brake operating cable are respectively mounted to the first brake arm and the second brake arm, and when a braking lever is gripped to perform a braking operation, braking is applied by reducing a distance between a first brake shoe and a second brake shoe that oppose each other and thereby sandwiching a rim portion of a wheel. Also, to adjust the distance between the first brake shoe and the second brake shoe when the brake is not in operation, an adjustment mechanism is provided in the first brake arm and/or the second brake arm in some cases. Accordingly, the distance between the first brake shoe of the first brake arm and the second brake shoe of the second brake arm can be adjusted according to the rim width of the wheel.

Typical center-pull bicycle brakes comprise first and second brake arms pivotably mounted to a bicycle frame member such as front fork or rear seat stay of the bicycle frame. Each brake arm includes a brake arm mounting portion for mounting the brake arm to the bicycle frame member, a brake pad mounting portion, and a control interface portion. The brake arm mounting portion is disposed between the brake pad mounting portion and the control interface portion such that the brake pad mounting portion is disposed below the brake arm mounting portion when the brake arm is mounted to the bicycle frame member. When the first and second brake arms are mounted to the bicycle frame member, the control interface portion of the first brake arm extends to the side of the bicycle frame member at which the second brake arm is mounted, and vice versa. First and second return springs usually are mounted between the respective first and second brake arm mounting portions and the bicycle frame member for biasing the first and second brake pad mounting portions away from the bicycle wheel rim.

After the first and second brake arms are mounted to the bicycle frame member, an intermediate control element such as a control wire is mounted to the first control interface portion of the first brake arm and to the second control interface portion of the second brake arm. A primary control element then is mounted to the center of the intermediate control element such that, when the primary control element is pulled upwardly, the first and second brake arms rotate against the biasing forces of the first and second return springs so that first and second brake pads mounted to the first and second brake pad mounting portions frictionally contact the bicycle wheel rim.

The friction caused by the structures used to mount the first and second brake arm mounting portions to the bicycle frame member sometimes is not equally balanced between the first and second brake arms. As a result, the rotation of the first and second brake arms is not properly synchronized, so the first and second brake pads do not contact the bicycle rim at the same time. Several attempts have been made to solve this synchronization problem. For example, JP 62-177592 discloses first and second gear wheels that engage gear teeth on the first and second brake arms to synchronously push the control interface portions of the first and second brake arms apart during operation of the brake; JP 63-112995 discloses first and second rollers respectively mounted to the first and second control interface portions of the first and second brake arms, wherein a cam mounted to the primary control element contacts the first and second rollers to synchronously push the first and second control interface portions of the first and second brake arms apart when the primary control element is pulled upwardly; JP 64-90890 discloses a pair of links with attached rollers that are pushed apart by a cam mounted to the primary control element, wherein the rollers synchronously push the first and second control interface portions of the first and second brake arms apart when the primary control element is pulled upwardly; JP 64-90891 discloses multiple links connected both in series and in parallel to the first and second brake arms and to the primary control element to synchronously push the first and second control interface portions of the first and second brake arms apart when the primary control element is pulled upwardly. However, such complicated structures add more friction and operating effort to the braking device, which only gets worse when the synchronizing assemblies are subjected to water, dirt, mud and other contaminants.

Another disadvantage of prior art braking systems is that the biasing forces of the return springs must be overcome by the rider in order to operate the brakes. When synchronizing structures are used to synchronize the operation of the first and second brake arms, stronger return springs must be used to generate the greater biasing forces needed to overcome the additional friction created by the synchronizing structures and rotate the first and second brake arms so that the first and second brake pads are separated from the wheel rim. Such additional biasing forces further increase the effort required by the rider to operate the brakes.

JP 1-172995 discloses one type of center-pull bicycle brake. Because of the configuration of the first and second brake arms, the points of attachment of the control wire are axially offset from each other as shown in Fig. 2 of that publication. As a result, the control wire is twisted, thus resulting in axial stress on the control wire where the control wire attaches to the first and second brake arms. Such axial stress increases wear on the control wire, especially where the control wire attaches to the first and second brake arms. Also, the control wire tends to pull one brake arm forward and the other brake arm backward relative to the primary control element.

DE 3805237 discloses a brake device wherein one brake arm extends through an opening in the other brake arm, and DE 203 19 913 discloses a brake device wherein one brake arm extends through a slot formed by the other brake arm. In both devices, a Bowden-type control cable mounts to one side of the brake assembly so that the control cable is mounted to the first and second brake arms in a straight line. However, since a Bowden cable is used for the control cable, the brake arms must be configured to mount both the inner wire and the outer casing of the Bowden cable, thereby increasing the weight and complexity of the brake assembly.

Some bicycle brakes comprise first and second brake arms pivotably mounted to a bicycle frame member such as front fork or rear seat stay of the bicycle frame. Each brake arm includes a brake arm mounting portion for mounting the brake arm to the bicycle frame member, a brake pad mounting portion, and a control interface portion. The brake arm mounting portion is disposed between the brake pad mounting portion and the control interface portion such that the brake pad mounting portion is disposed below the brake arm mounting portion when the brake arm is mounted to the bicycle frame member. Such brakes may be cable operated or hydraulically operated. A return spring ordinarily is provided to bias the brake pad mounting portions of the first and second brake arms towards each other.

U.S. Patent Nos. 3,338,337 and 3,899,057 disclose examples of hydraulically operated brakes. As shown in those patents, a piston assembly is coupled to the control interface portions of the first and second brake arms. The piston assembly comprises a piston disposed within a hydraulic chamber formed in a housing, wherein the housing includes first and second axial ends. The piston includes an output shaft that extends from the first axial end of the housing. The output shaft is connected to the control portion of the first brake arm, and the second axial end of the housing is connected to the control portion of the second brake arm. During operation, hydraulic fluid is introduced into the hydraulic chamber to cause the piston to move axially towards the first axial end of the housing, thereby causing the output shaft to extend further from the first axial end of the housing. As a result, the control portion of the first brake arm moves away from the control portion of the second brake arm, thereby causing the brake pad mounting portions of the first and second brake arms to move towards the wheel rim so that brake pads mounted to the first and second brake arms contact the wheel rim. Document TW 3 602 01U discloses a bicycle braking device according to the preamble of claim 1.

### SUMMARY OF THE INVENTION

### Problems to be Solved by the Invention

In the conventional braking device when the braking lever is gripped to apply braking, the first brake arm and the second brake arm respectively pivot, so that the pivotal movements of the first brake arm and the second brake arm may become unsynchronized.

Also, in a dual-pivot type brake, the pivotal movements may become unsynchronized due to a difference in the rotational resistance of the respective rotation axles (pivots).

Such phenomena are seen especially after performing the braking operation, that is, in a brake releasing operation. The brake releasing operation is normally performed by biasing means such as a spring, so that the above phenomena may be caused by uneven biasing forces on the respective brake arms, and the pivotal movement of one of the brake arms and the pivotal movement of the other of the brake arms are possibly unsynchronized during the brake releasing operation even after the braking lever is released. That is, movements of the braking device including a movement caused by the braking operation and the brake releasing operation are possibly delayed.

It is an object of the present invention to prevent unsynchronized pivotal movements of a first brake arm and a second brake arm in a braking operation and in a brake releasing operation.

The present invention is directed to various features of a bicycle brake device. In one embodiment a bicycle braking device comprises: a first brake arm having a first mounting portion pivotally mountable to a bicycle frame, a first brake shoe mounting portion to which a first brake shoe is mounted, and a first cable mounting portion to which a brake operating cable is mounted; a second brake arm having a second mounting portion pivotally mountable to the bicycle frame, and a second brake shoe mounting portion to which a second brake shoe is mounted; a biasing member biasing the first brake arm and the second brake arm in a direction in which the first brake shoe mounting portion and the second brake shoe mounting portion are separated from each other; and a communicating member, also referred to as bias communication member, bias communicating link portion or simply as link portion, link member which allows the first brake arm and the second brake arm to pivot in synchronization.

The bicycle braking device further comprises a biasing force adjustment mechanism provided at at least one of the first portion and the second portion of the biasing member to adjust a biasing force of the biasing member. In this case, the biasing force of the biasing member in a brake releasing direction of the first brake arm and the second brake arm can be adjusted by the biasing force adjustment mechanism. Therefore, when the biasing force is increased, the braking device is quickly switched to a brake releasing state, and when the biasing force is decreased, even a rider with a weak grip can easily perform the braking operation.

The biasing member is a coil spring, and the biasing force adjustment mechanism has a biasing force adjustment member rotatably supported by at least one of the first brake arm and the second brake arm and has a spiral spring holding groove, the coil spring is held along the spring holding groove. In this case, the biasing force can be easily adjusted only by rotating the biasing force adjustment member.

The biasing force adjustment mechanism adjusts the biasing force by rotating the biasing force adjustment member and thereby moving the coil spring along the spring holding groove with respect to the biasing force adjustment member

Preferably the biasing member has a first portion and a second portion; wherein the first portion of the biasing member is operatively coupled to the first brake arm and a second portion of the biasing member is operatively coupled to the second brake arm.

In a particularly preferred embodiment, a bicycle brake device comprises a pair of brake arms and a biasing member having a first portion and a second portion. Each brake arm includes a brake arm mounting portion for mounting the brake arm to a bicycle frame member to pivot around a pivot axis of a corresponding pivot axle, a brake pad mounting portion, and a control interface portion. The first portion of the biasing member is operatively coupled to one of the brake arms so that the brake shoe mounting portion of that brake arm is biased in a selected direction, and the second portion of the biasing member is coupled to the pivot axle of the other brake arm.

Preferably the first mounting portion is adapted to mount to the bicycle frame for pivoting around a first pivot axis, and wherein the second brake arm mounting portion is adapted to mount to the bicycle frame for pivoting around a second pivot axis.

Preferably the biasing member has a first portion and a second portion; wherein the first portion of the biasing member is operatively coupled to the first brake arm so that the first brake shoe mounting portion of the first brake arm is biased in a selected direction; and wherein the second portion of the biasing member is coupled to a pivot axle of the second brake arm.

In a bicycle braking device according to a preferred embodiment the device includes a first brake arm, a second brake arm, a biasing member, and a communicating member. The first brake arm has a first mounting portion, a first brake shoe mounting portion, and a first cable mounting portion. The first mounting portion is pivotally mountable to a bicycle frame. A first brake shoe is mounted to the first brake shoe mounting portion. A brake operating cable is mounted to the first cable mounting portion. The second brake arm has a second mounting portion, and a second brake shoe mounting portion. The second mounting portion is pivotally mountable to the bicycle frame. A second brake shoe is mounted to the second brake shoe mounting portion. The biasing member has a first portion mounted to the first brake arm, and a second portion mounted to the second brake arm, and biases the first brake arm and the second brake arm in a direction in which the first brake shoe mounting portion and the second brake shoe mounting portion are separated from each other. The communicating member allows the first brake arm and the second brake arm to pivot in synchronization when a brake is operated.

In such a braking device, when the brake operating cable is operated by a braking lever, the first brake arm and the second brake arm move in a direction to approach each other. At this time, the second brake arm pivots in synchronization with a pivotal movement of the first brake arm by the communicating member. That is, when the brake is operated so as to perform either a braking operation or a brake releasing operation, unsynchronized pivotal movements of the first brake arm and the second brake arm can be prevented.

Preferably the second brake arm further comprises a second cable mounting portion. In this case, an inner cable of the cable is mounted to the first cable mounting portion, and an outer casing is mounted to the second cable mounting portion, so that the unsynchronized pivotal movements of the first brake arm and the second brake arm can be more reliably prevented with a returning force of the brake cable being applied in addition to the pivot synchronizing action of the communicating member.

Preferably both the first cable mounting portion and the second cable mounting portion are disposed on a same side as one of the first brake shoe mounting portion and the second brake shoe mounting portion. In this case, the unsynchronized pivotal movements of the first brake arm and the second brake arm can be prevented in any kind of braking device, even in a side-pull type bicycle braking device.

Preferably the communicating member has a first link portion provided in the first brake arm, and a second link portion provided in the second brake arm and contactable with the first link portion. In this case, the first link portion and the second link portion contact each other, so that the first brake arm and the second brake arm are more easily allowed to pivot in synchronization.

Preferably the communicating member has a roller provided in one of the first link portion and the second link portion and contacting the other of the first link portion and the second link portion. In this case, since the first brake arm and the second brake arm contact each other through the roller, rolling resistance, not sliding resistance, is applied thereto, so that a heavy brake operating force is not required even when the first brake arm and the second brake arm are brought into contact with each other.

Preferably the communicating member has a contact portion provided in the other of the first link portion and the second link portion and contactable with the roller. In this case, friction at the contact portion can be reduced.

In a preferred embodiment the second brake arm has a second brake arm body, and a second link member having the second link portion, and the bicycle braking device further comprises an adjustment portion which adjusts a relative position between the second brake arm body and the second link member. In this case, a contact portion of the second brake arm with the first brake arm is provided as a separate member, and the relative position thereof can be adjusted, so that the first brake arm and the second brake arm can be appropriately disposed with respect to a rim of a wheel.

Preferably the first brake arm and the second brake arm are mountable to a bicycle chain stay. In this case, the braking device is disposed on the chain stay that is located in a lower portion of a bicycle, so that the braking device does not produce air resistance while the bicycle is running.

In a preferred embodiment the bicycle braking device further comprises an adapter having a first fixing portion to which the first mounting portion is fixable, a second fixing portion to which the second mounting portion is fixable, and a third fixing portion disposed between the first fixing portion and the second fixing portion and fixable to the bicycle frame.

By using the adapter, the braking device can be fixed to a conventional frame with only one hole for mounting a braking device, for example, via the adapter. Also, as for a frame having two holes for mounting the braking device, the first mounting portion and the second mounting portion can be directly fixed to the frame.

With the present invention, the first brake arm and the second brake arm pivot in synchronization, e,g, by the communicating member. That is, the unsynchronized pivotal movements of the first brake arm and the second brake arm can be prevented when the brake is operated so as to perform either the braking operation or the brake releasing operation. Particularly, the unsynchronized pivotal movements of the first brake arm and the second brake arm can be prevented in the braking operation in which the brake arms pivot only by the biasing force (the spring force).

Additional inventive features will become apparent from the description below, and such features alone or in combination with the above features may form the basis of further inventions as recited in the claims.

### BRIEF DESCRIPTION OF THE DRAWINGS

Fig. 1 is a front view of a bicycle front braking device according to a first embodiment, which does not form part of the claimed invention.
Fig. 2 is a rear view of the front braking device.
Fig. 3 is a front perspective view of the front braking device.
Fig. 4 is a rear perspective view of the front braking device.
Fig. 5 is a front partly sectional partial view for explaining a link member as a communicating member.
Fig. 6 is a view illustrating a mounting state of a rear braking device according to a second embodiment of the present invention.
Fig. 7 is a front view of the rear braking device according to the second embodiment, which is an embodiment of the present invention.
Fig. 8 is a rear view of the rear braking device.
Fig. 9 is a front perspective view of the rear braking device.
Fig. 10 is a rear perspective view of the rear braking device.
Fig. 11 is a front partly sectional partial view for explaining a link member as communicating member.
Fig. 12 is a perspective view of a case in which the front braking device is mounted using an adapter, which does not form part of the claimed invention
Fig. 13 is a front view of an embodiment of a bicycle brake device attached to a front fork of a bicycle and which does not form part of the claimed invention;
Fig. 14 is a right side view of the bicycle brake device;
Fig. 15 is a left side view of the bicycle brake device;
Fig. 16 is an exploded perspective view of the bicycle brake device;
Fig. 17 is a front view of a communicating member;
Fig. 18 is a partial cross-sectional view of the bicycle brake device in a brake-released position;
Fig. 19 is a partial cross-sectional view of the bicycle brake device in a brake-engaged position;
Fig. 20 is a lower perspective view of another embodiment of a bicycle brake device which does not form part of the claimed invention;
Fig. 21 is a detailed view of top portions of the bicycle brake device shown in Fig. 20;
Fig. 22 is a perspective view of a communicating member used in the embodiments shown in Figs. 20 and 21;
Fig. 23 is a rear view of the bicycle brake device shown in Fig. 20;
Fig. 24 is a cross-sectional view of an alternative embodiment of a piston assembly taken along line 12-12 in Fig. 25 which does not form part of the claimed invention;
Fig. 25 is a detailed view of an alternative embodiment of a coupling between the piston shaft and the first control interface portion of the first brake arm which does not form part of the claimed invention;
Fig. 26 is a more detailed view of the piston shaft, cross-dowel and adjusting member;
Fig. 27 is a top view of the brake assembly in a first adjustment state;
Fig. 28 is a top view of the brake assembly in a second adjustment state;
Fig. 29 is a schematic cross-sectional view of an alternative embodiment of an accumulator chamber;
Fig. 30 is a view taken along line 18-18 in Fig. 29;
Fig. 31 is a view taken along line 19-19 in Fig. 29;
Fig. 32 is a schematic cross-sectional view of another alternative embodiment of an accumulator chamber;
Fig. 33 is a view taken along line 21-21 in Fig. 32;
Fig. 34 is a schematic cross-sectional view of another alternative embodiment of an accumulator chamber;
Fig. 35 is a view taken along line 23-23 in Fig. 34 showing a first embodiment of a concavity in the accumulator chamber;
Fig. 36 is a view taken along line 24-24 in Fig. 34 showing the concavity from a different axial position;
Fig. 37 is a view taken along line 25-25 in Fig. 34 showing a second embodiment of a concavity in the accumulator chamber; and
Fig. 38 is a view taken along line 26-26 in Fig. 34 showing the concavity from a different axial position.

### DETAILED DESCRIPTION OF THE EMBODIMENTS

### (First Embodiment - not part of the claimed invention)

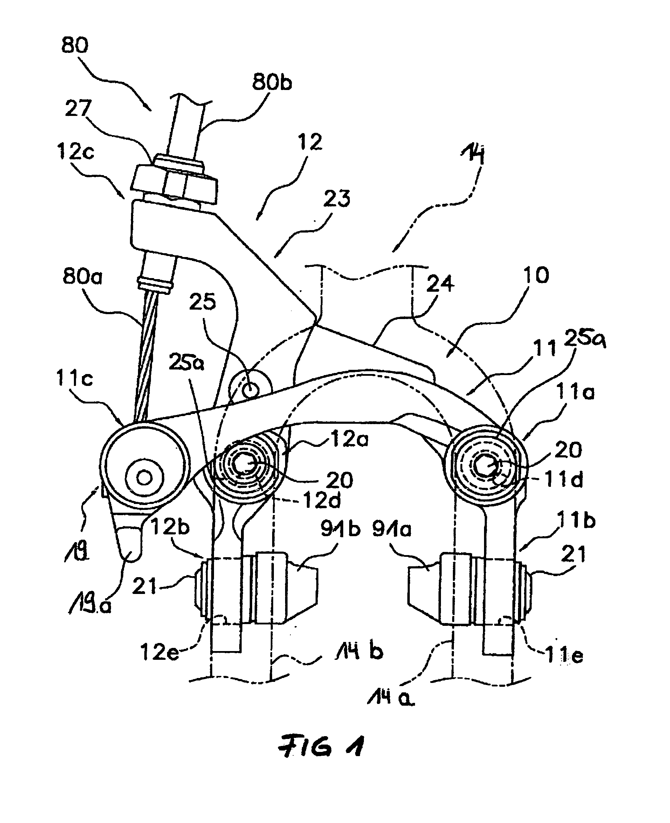

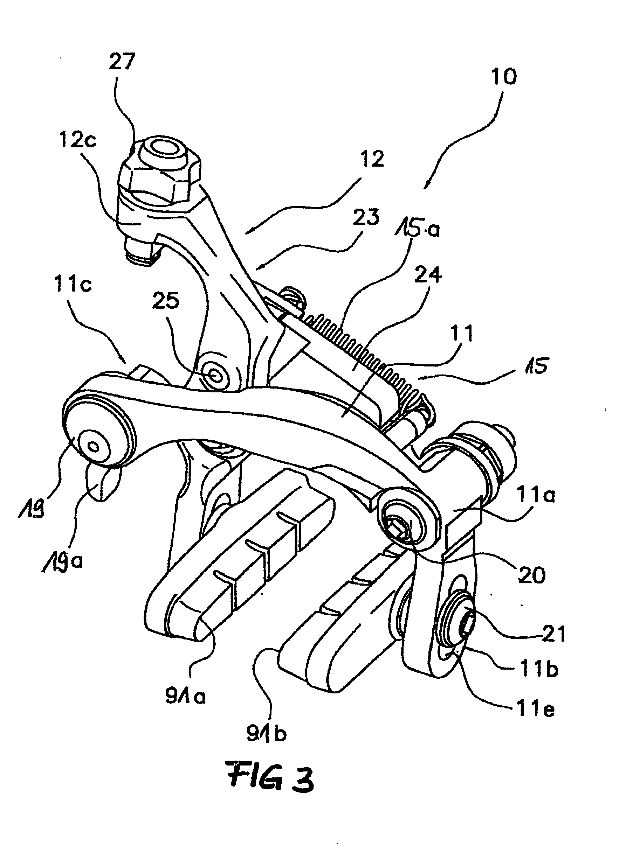

In Figures 1 to 4, a bicycle front braking device 10 according to a first embodiment is a side-pull type caliper brake having two pivot centers. In the following description, the terms upper, lower, left, and right mean upper, lower, left, and right in a state in which a bicycle is viewed from the rear side.

The front braking device 10 is mounted to a bifurcated pair of fork blades 14a and 14b of a front fork 14 of a bicycle. Thus, a mounting hole is provided in each of the pair of fork blades 14a and 14b. The front braking device 10 includes a first brake arm 11, a second brake arm 12, a biasing member 15, a link member 16 as communicating member in claims, and an adjustment portion 17.

### (First brake arm)

The first brake arm 11 is a member made of metal such as aluminum alloy curved in an almost C shape. The first brake arm 11 has a first mounting portion 11 a pivotally mountable to the left-side fork blade 14a, a first brake shoe mounting portion 11b to which a left first brake shoe 91 a is mounted, and a first cable mounting portion 11c to which an inner cable 80a of a brake operating cable 80 is mounted. The first mounting portion 11 a has a bush hole 11d into which a bush 25a that supports a mounting bolt 20 for mounting the first mounting portion 11a to the fork blade 14a is fitted. The first brake shoe mounting portion 11b substantially linearly extends downward from the first mounting portion 11 a. The first brake shoe mounting portion 11b has a long hole 11e through which a shoe fixing bolt 21 for fixing the first brake shoe 91a can penetrate.

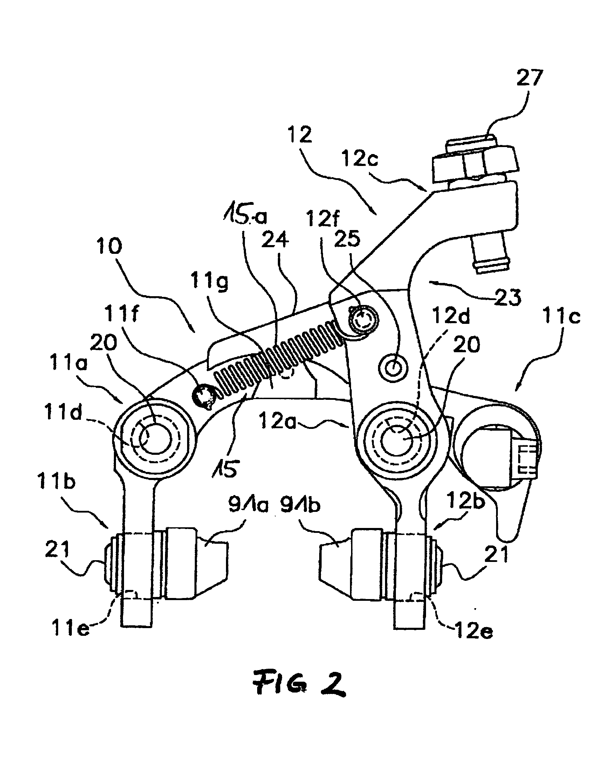

The first cable mounting portion 11c extends to the right side (the left side in Figure 1, the right side in Figure 2) while being slightly curved from the first mounting portion 11a. A quick release mechanism 19 for opening the first brake arm 11 and the second brake arm 12 through one-touch operation is provided at the distal end of the first cable mounting portion 11c. The quick release mechanism 19 has a lever member 19a, and when the lever member 19a is rotated clockwise in Figure 1 from the position shown in Figure 1, the inner cable 80a is loosened to open the first brake arm 11 and the second brake arm 12. Wheels can be thereby easily replaced.

A first spring hooking portion 11f for hooking a first portion (one end) of the biasing member 15 is provided on a rear surface (Figure 2) of the first brake arm 11. The first spring hooking portion 11f is a pin member having a large-diameter head portion at the distal end. The basal end of the first spring hooking portion 11f is fixed to the rear surface of the first brake arm 11. A roller bracket 11g for mounting the link member 16 is also formed integrally with the rear surface of the first brake arm 11.

### (Second brake arm)

The second brake arm 12 has a second mounting portion 12a pivotally mountable to the left-side fork blade 14b, a second brake shoe mounting portion 12b to which a right second brake shoe 91b is mounted, and a second cable mounting portion 12c to which an outer casing 80b of the brake operating cable 80 is mounted. The second mounting portion 12a has a bush hole 12d into which a bush 25a that supports a mounting bolt 20 for mounting the second mounting portion 12a to the fork blade 14b is fitted. The second brake shoe mounting portion 11b is disposed so as to oppose the first brake shoe mounting portion 11b, and substantially linearly extends downward from the second mounting portion 12a. The second brake shoe mounting portion 12b has a long hole 12e through which a shoe fixing bolt 21 for fixing the second brake shoe 91b can penetrate. An outer locking portion 27 capable of adjusting the axial position of the outer casing 80b and the inner cable 80a is provided on the second cable mounting portion 12c.

The second brake arm 12 has a second brake arm body 23, and a second link member 24 where the link member 16 is provided. The second brake arm body 23 is a member made of metal such as aluminum alloy. A second spring hooking portion 12f for hooking a second portion (the other end) of the biasing member 15 is provided on a rear surface of the second brake arm body 23. The second spring hooking portion 12f is a pin member having a large-diameter head portion at the distal end. The basal end of the second spring hooking portion 12f is fixed to the rear surface of the second brake arm body 23. The second mounting portion 12a, the second brake shoe mounting portion 12b, and the second cable mounting portion 12c are provided in the second brake arm body 23.

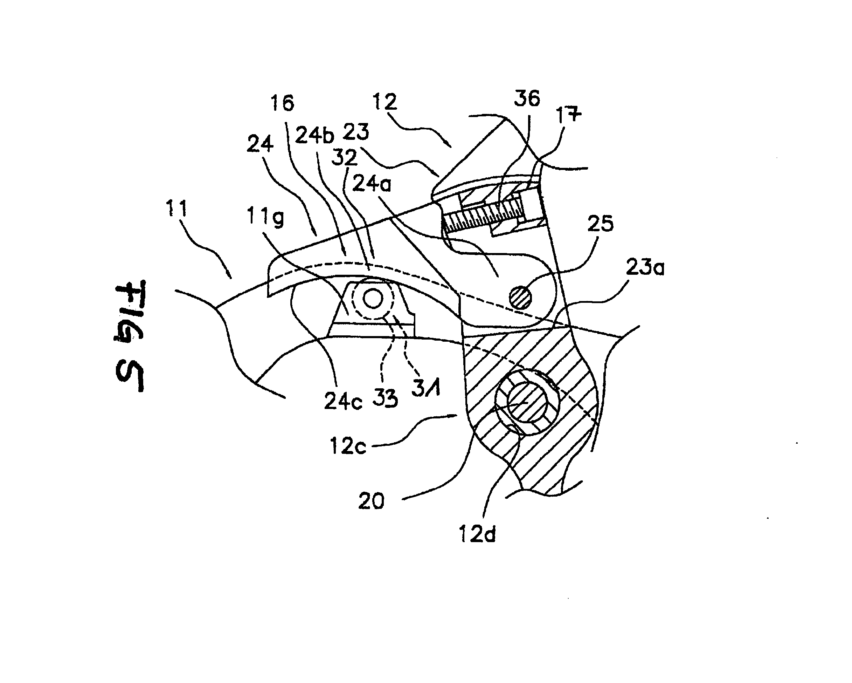

The second link member 24 is pivotally supported by a pivot axle 25 that is fitted into a vertically-long slot 23a formed in the second brake arm body 23 as shown in Figure 5. The second link member 24 is a plate-like member made of metal such as aluminum alloy. The second link member 24 has a thin-walled pivot coupling portion 24a disposed within the slot 23a and supported by the pivot axle 25, and a contact portion 24b formed integrally with the pivot coupling portion 24a. The contact portion 24b constitutes a second link portion 32 of the link member 16. A lower surface 24c of the contact portion 24b is curved in an arc shape.

### (Biasing member)

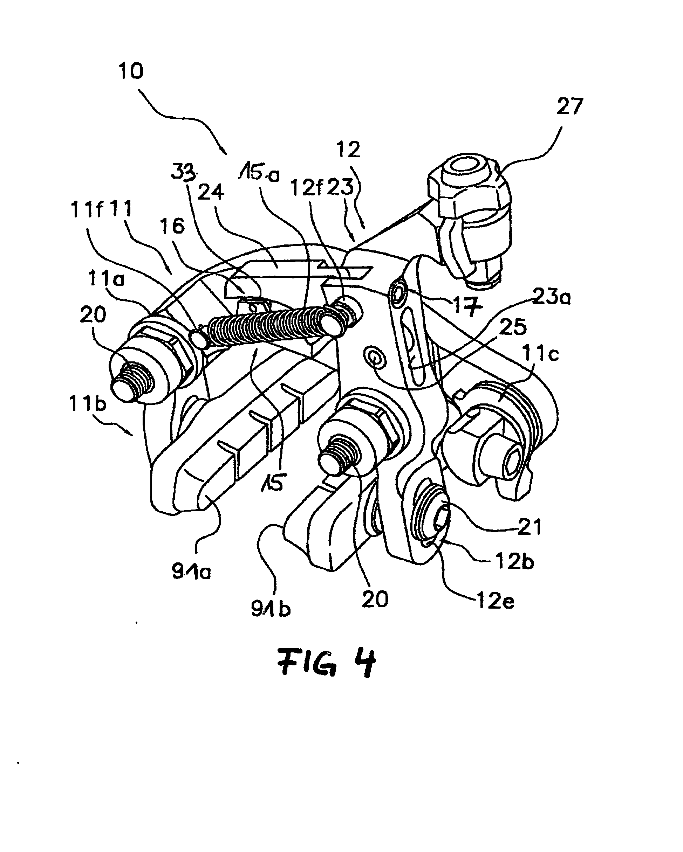

The biasing member 15 biases the first brake arm 11 and the second brake arm 12 in a brake releasing direction, that is, in a direction in which the first brake shoe mounting portion 11b and the second brake shoe mounting portion 12b are separated from each other. The biasing member 15 is a coil spring 15a as shown in Figures 2 and 4.

### (Link member)

The link member 16 is provided for moving the first brake arm 11 and the second brake arm 12 in synchronization when the front braking device 10 is operated. The link member 16 has a first link portion 31 provided in the first brake arm 11, and the second link portion 32 provided in the second brake arm 12 as shown in Figure 5. The first link portion 31 has a roller 33 rotatably supported by the roller bracket 11g. The second link portion 32 has the contact portion 24b provided in the second link member 24 of the second brake arm 12. The lower surface 24c of the contact portion 24b contacts the roller 33. Thus, when the first brake arm 11 pivots, the roller 33 presses the contact portion 24b of the second link member 24, so that the second brake arm 12 pivots in synchronization with the first brake arm 11 through the second link member 24. Accordingly, when the first brake arm 11 pivots, the link member 16 allows the second brake arm 12 to pivot in synchronization therewith.

### (Adjustment portion)

The adjustment portion 17 is provided for adjusting the relative position between the second brake arm body 23 and the second link member 24. When the relative position between the second brake arm body 23 and the second link member 24 is adjusted by the adjustment portion 17, a distance between the first brake shoe 91a and the second brake shoe 91b can be adjusted. Accordingly, distances from rims having different widths to the first brake shoe 91 a and the second brake shoe 91b can be adjusted to the same length. The adjustment portion 17 has an adjustment screw 36 disposed above the slot 23a of the second brake arm body 23 as shown in Figure 5. The adjustment screw 36 is screwed into the second brake arm body 23. The adjustment screw 36 is obliquely disposed so as to be contactable with a stepped portion between the pivot coupling portion 24a and the contact portion 24b of the second link member 24. Since the second brake arm body 23 is biased in the brake releasing direction (the counterclockwise direction in Figure 5) by the biasing member 15, the second link member 24 is pressed by the roller 33 to be always in contact with the adjustment screw 36. Thus, when the adjustment screw 36 is loosened, the first brake arm 11 and the second brake arm 12 pivot in the brake releasing direction in synchronization. When the adjustment screw 36 is tightened, the first brake arm 11 and the second brake arm 12 pivot in a braking direction in synchronization.

### (Braking operation)

When a braking operation is performed by a braking lever, the first brake arm 11 is pulled by the inner cable 80a to pivot in the braking direction. When the first brake arm 11 pivots in the braking direction, the roller 33 presses the contact portion 24b. When pressed, the second link member 24 allows the second brake arm body 23 to pivot in the braking direction through the adjustment screw 36, and thereby applies braking to a rim of a wheel.

Also, when a brake releasing operation is performed by loosening the braking lever, the first brake arm 11 and the second brake arm 12 pivot in the brake releasing direction by a biasing force of the biasing member 15. In this case, the first brake arm 11 and the second brake arm 12 also pivot in the brake releasing direction in synchronization by the action of the link member 16.

Here, the first brake arm 11 and the second brake arm 12 move in synchronization by the link member 16. That is, the first brake arm 11 and the second brake arm 12 can be thereby moved together in both the cases in which the braking operation is performed and in which the brake releasing operation is performed.

### (Second Embodiment)

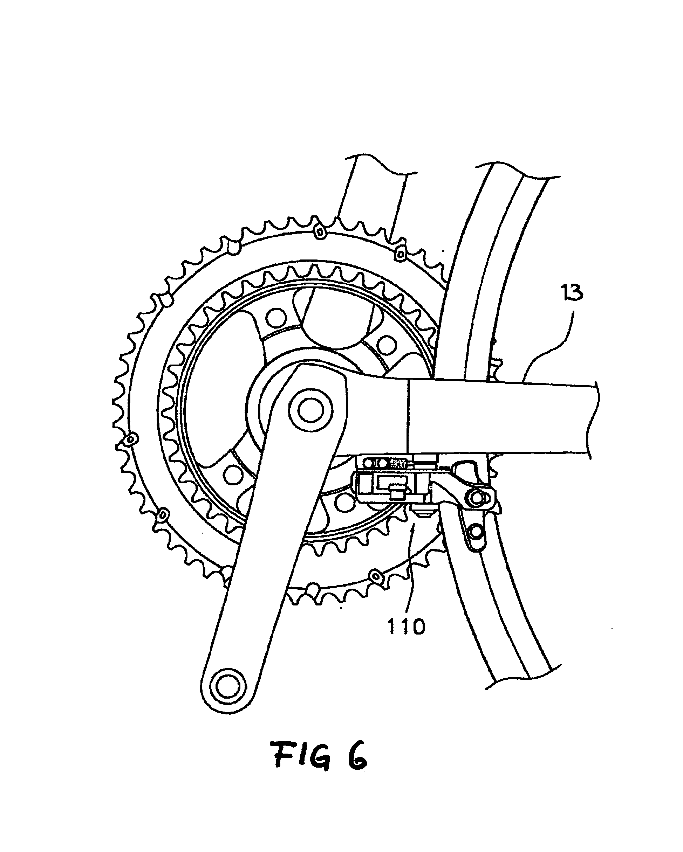

In Figure 6, a bicycle rear braking device 110 according to a second embodiment of the present invention is a side-pull type caliper brake having two pivot centers.

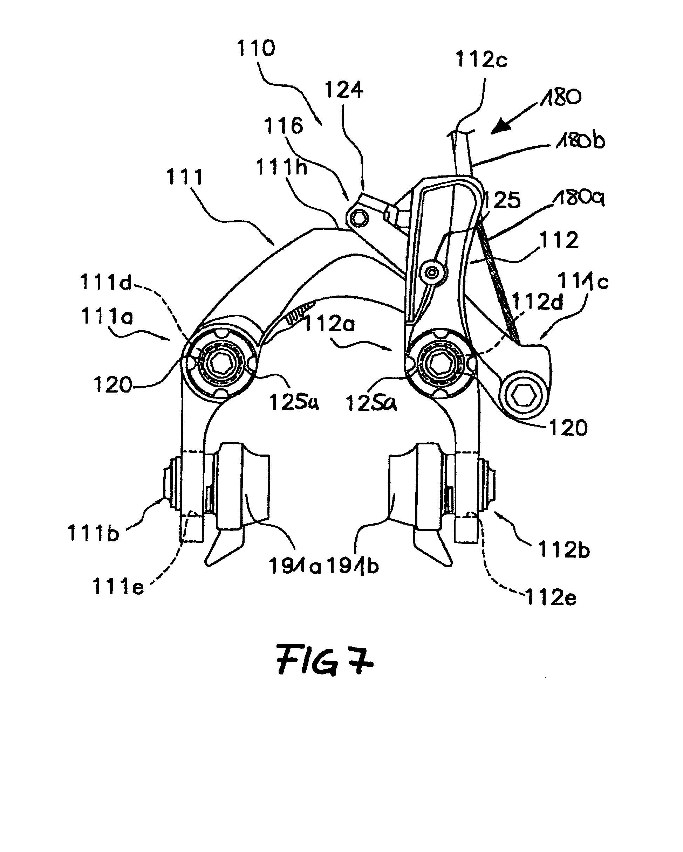

The rear braking device 110 is mounted on a lower surface of a bifurcated pair of chain stays 13 of a bicycle. Thus, a mounting hole is provided in each of the pair of chain stays 13. As shown in Figures 7 to 10, the rear braking device 110 includes a first brake arm 111, a second brake arm 112, a biasing member 115, a link member 116 as communicating member, an adjustment portion 117, and a biasing force adjustment mechanism 119. In the rear braking device 110, the first brake arm 111 and the second brake arm 112 are disposed in a reversed manner from that in the front braking device 10.

### (First brake arm)

The first brake arm 111 is a member made of metal such as aluminum alloy curved in an almost C shape. The first brake arm 111 has a first mounting portion 111a pivotally mountable to one of the pair of chain stays 13, a first brake shoe mounting portion 111b to which a right first brake shoe 191a is mounted, and a first cable mounting portion 111c to which an inner cable 180a of a brake operating cable 180 is mounted. The first mounting portion 111a has a bush hole 111d into which a bush 125a that supports a mounting bolt 120 for mounting the first mounting portion 111a to the chain stay 13 is fitted. The first brake shoe mounting portion 111b linearly extends downward from the first mounting portion 111a. The first brake shoe mounting portion 111b has a bolt hole 111e through which a shoe fixing bolt 121 for fixing the first brake shoe 191a can penetrate.

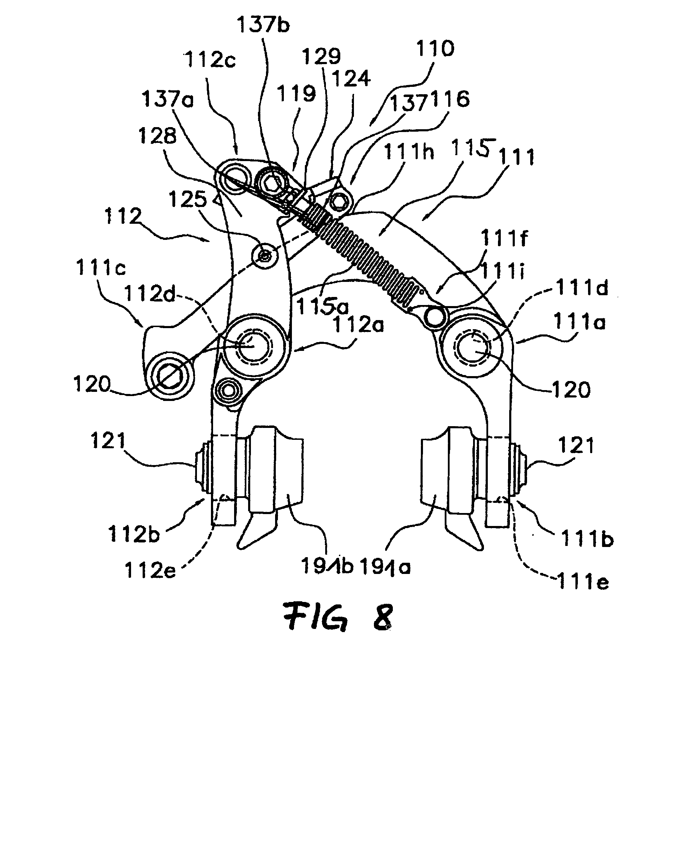

The first cable mounting portion 111c extends to the left side (the right side in Figure 7, the left side in Figure 8) while being largely curved from the first mounting portion 111a. The first cable mounting portion 111c fixes the inner cable 180a with a screw. Although a quick release mechanism is not provided in the first cable mounting portion 111c, a quick release mechanism may be also provided.

A first spring hooking portion 111f for hooking a first portion (one end) of the biasing member 115 is provided on a rear surface (Figure 8) of the first brake arm 111. The first spring hooking portion 111f is rotatably mounted on the rear surface. The first spring hooking portion 111f has a plurality of locking holes 111i for locking the biasing member 115 composed of a coil spring 15a. The plurality of locking holes 111i are formed according to the pitch of the coil spring 15a when the coil spring 15a has a free length.

### (Second brake arm)

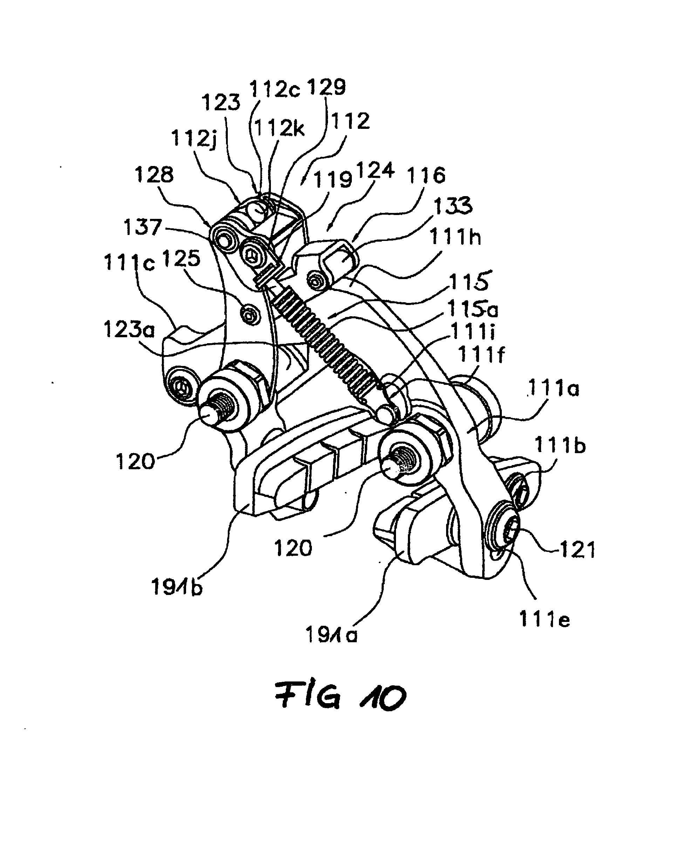

The second brake arm 112 has a second mounting portion 112a pivotally mountable to the other of the pair of chain stays 13, a second brake shoe mounting portion 112b to which a left second brake shoe 191b is mounted, and a second cable mounting portion 112c to which an outer casing 180b of the brake operating cable 180 is mounted. The second mounting portion 112a has a bush hole 112d into which a bush 125a that supports a mounting bolt 120 for mounting the second mounting portion 112a to the chain stay 13 is fitted. The second brake shoe mounting portion 112b is disposed so as to oppose the first brake shoe mounting portion 111b, and substantially linearly extends downward from the second mounting portion 112a. The second brake shoe mounting portion 112b has a long hole 112e through which a shoe fixing bolt 121 for fixing the second brake shoe 191b can penetrate. The second cable mounting portion 112c locks the outer casing 180b. The second cable mounting portion 112c has a second brake arm body 123 described below, and an axle member 112j rotatably supported by a support member 128, and a recessed portion 112k for locking the outer casing 180b is formed in the axle member 112j as shown in Figure 10.

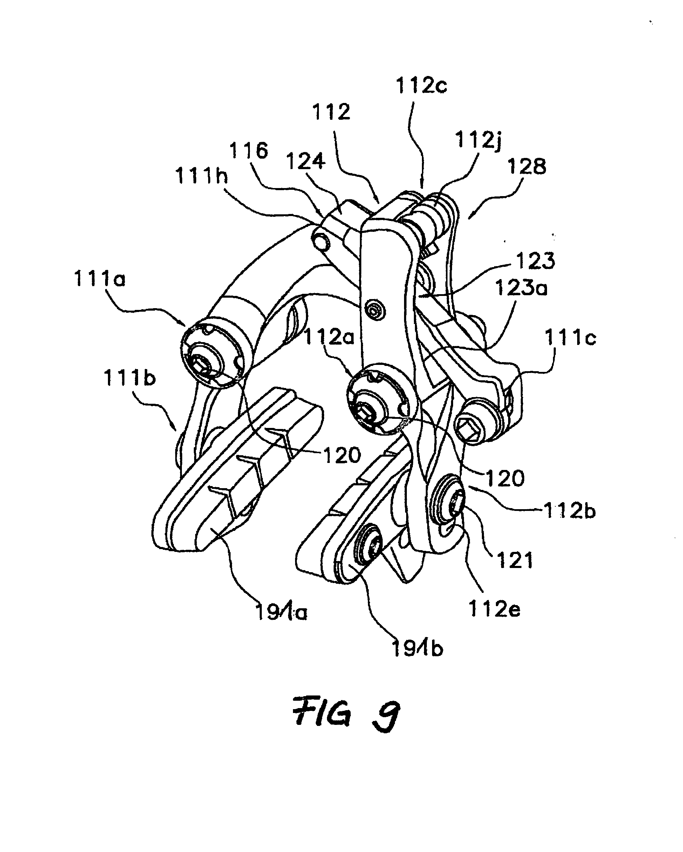

The second brake arm 112 has the second brake arm body 123, a second link member 124 where the link member 116 is provided, and the support member 128 screwed to the second brake arm body 123 as shown in Figures 9 and 10. The second brake arm body 123 is a member made of metal such as aluminum alloy. The biasing force adjustment mechanism 119 is provided on a rear surface of the second brake arm body 123. The biasing force adjustment mechanism 119 will be described later. The second mounting portion 112a, the second brake shoe mounting portion 112b, and the second cable mounting portion 112c are provided in the second brake arm body 123.

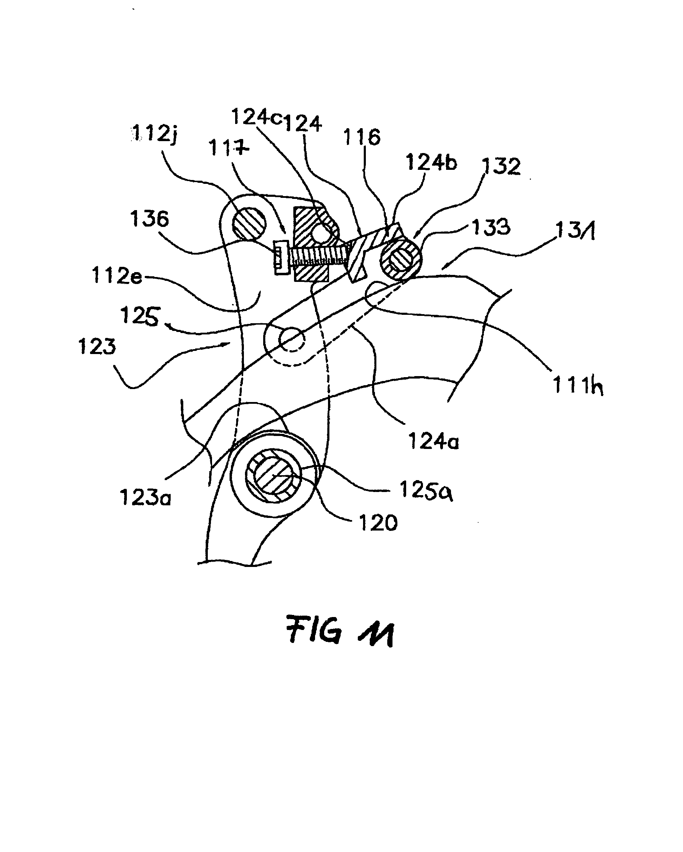

The second link member 124 is pivotally supported by a pivot axle 125 that is fitted into a vertically-long recessed portion 123a formed in the second brake arm body 123 as shown in Figure 11. The second link member 124 is a plate-like member made of metal such as aluminum alloy. The second link member 124 has a pivot coupling portion 124a disposed within the slot 23a and supported by the pivot axle 125, and a roller bracket 124b formed integrally with the pivot coupling portion 24a and having a C shape in section. A roller 133 constituting the link member 116 is rotatably supported by the roller bracket 124b. A basal end portion of the roller bracket 124b is bent at 90 degrees, and a recessed portion 124c is formed in the portion with which the adjustment portion 117 is in contact.

The support member 128 is a plate-like member made of metal such as aluminum alloy, for example. The support member 128 is screwed to the second brake arm body 123 with a plurality of screws. The support member 128 supports the pivot axle 125 that supports the second link member 124.

### (Biasing member)

The biasing member 115 biases the first brake arm 111 and the second brake arm 112 in a brake releasing direction, that is, in a direction in which the first brake shoe mounting portion 111b and the second brake shoe mounting portion 112b are separated from each other. The biasing member 115 is the coil spring 115a as shown in Figures 8 and 10. The biasing force adjustment mechanism 119 is provided at the other end of the biasing member 115.

### (Link member)

The link member 116 is provided for moving the first brake arm 111 and the second brake arm 112 in synchronization when the rear braking device 110 is operated. The link member or communicating member 116 has a first link portion 131 provided in the first brake arm 111, and a second link portion 132 provided in the second brake arm 112 as shown in Figure 11. The first link portion 131 has a contact portion 111h formed on a curved outer peripheral surface of the first brake arm 111. The second link portion 132 has the roller 133 rotatably supported by the roller bracket 124b. The contact portion 111h contacts the roller 133. Thus, when the first brake arm 111 pivots, the link member 116 allows the second brake arm 112 to pivot in synchronization therewith acting as a communicating member.

### (Adjustment portion)

The adjustment portion 117 is provided for adjusting the relative position between the second brake arm body 123 and the second link member 124. When the relative position between the second brake arm body 123 and the second link member 216 is adjusted by the adjustment portion 117, a distance between the first brake shoe 191a and the second brake shoe 191b can be adjusted. Accordingly, distances from rims having different widths to the first brake shoe 191 a and the second brake shoe 191b can be adjusted to the same length. The adjustment portion 117 has an adjustment screw 136 disposed above the recessed portion 123a of the second brake arm body 123 as shown in Figure 11. The adjustment screw 136 is screwed into the second brake arm body 123. The adjustment screw 136 is obliquely disposed so as to be contactable with the recessed portion 124c of the second link member 124. Since the second brake arm body 123 is biased in the brake releasing direction (the clockwise direction in Figure 11) by the biasing member 115, the second link member 124 is pressed by the roller 133 to be always in contact with the adjustment screw 136. Thus, when the adjustment screw 136 is loosened, the first brake arm 111 and the second brake arm 112 pivot in the brake releasing direction in synchronization. When the adjustment screw 136 is tightened, the first brake arm 111 and the second brake arm 112 pivot in a braking direction in synchronization.

### (Biasing force adjustment mechanism)

The biasing force adjustment mechanism 119 is provided so as to make a biasing force of the biasing member 115 adjustable. The biasing force adjustment mechanism 119 is rotatably supported by a rotation support member 129 provided at the second brake arm 112 as shown in Figure 8. The biasing force adjustment mechanism 119 has a biasing force adjustment member 137. The biasing force adjustment member 137 has a spiral spring holding groove 137a, and the coil spring 115a is held along the spring holding groove 137a. A tool engagement portion 137b where a hexagonal wrench is to be engaged is formed on the biasing force adjustment member 137, and the hexagonal wrench can rotate the biasing force adjustment member 137. Accordingly, the coil spring 115a stretches, so that a spring force of the coil 115a can be adjusted.

The bicycle rear braking device 110 having the configuration as described above can also produce the same effects as those of the first embodiment.

Also, since the biasing force adjustment mechanism 119 is provided, the biasing force of the biasing member 115 can be appropriately adjusted. Accordingly, when the biasing force is increased, the braking device is quickly switched to a brake releasing state, and when the biasing force is decreased, even a rider with a weak grip can easily perform the braking operation.

### (Third Embodiment - not part of the claimed invention)

In the aforementioned two embodiments, the braking device is directly mounted to the bicycle frame (the front fork 14 or the chain stay 13). In a third embodiment, however, the bicycle braking device further includes an adapter 49 mountable to an existing frame or a new frame even when there is only one mounting hole as in the conventional case. Although the front braking device 10 is employed as an example here, the third embodiment can be also applied to the rear braking device 110.

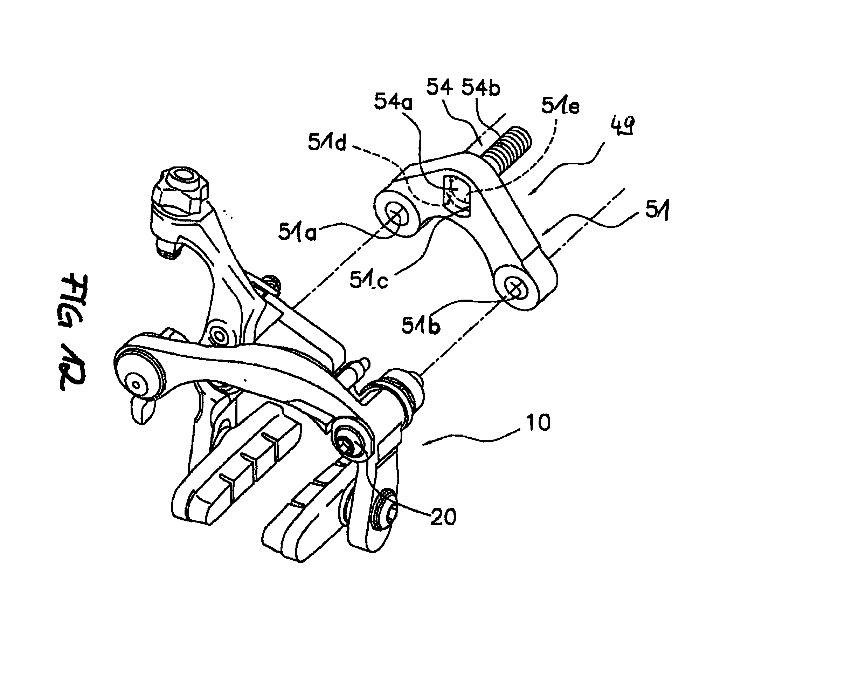

The front braking device 10 further includes the adapter 49 in addition to the configuration of the first embodiment as shown in Figure 12. The adapter 49 has an adapter body 51 and a fixing bolt 54 for fixing the adapter body 51 to a frame. The adapter body 51 is formed so as to be curved in a chevron shape, for example. The adapter body 51 has a first fixing portion 51a and a second fixing portion 51b, which can be disposed so as to oppose the first mounting portion 11a and the second mounting portion 12a, at the both ends. The first fixing portion 51a and the second fixing portion 51b are composed of holes having a size large enough for the mounting bolt 20 to pass therethrough. The adapter body 51 has a third fixing portion 51c mountable to the frame in the center portion. A non-circular recessed portion 51d engaged with a head portion 54a of the fixing bolt 54 is formed in the third fixing portion 51c. The fixing bolt 54 is thereby prevented from rotating. Also, a through hole 51e through which the fixing bolt 54 can penetrate is formed in the third fixing portion 51c.

By using the adapter 49 as described above, the braking device according to the present invention can be mounted to the frame with only one mounting hole. The adapter may include only the adapter body. In this case, a commercially-available bolt may be used as the fixing bolt.

### (further Embodiments as variants to the above)

Although some embodiments of the present invention have been described above, the present invention is not limited to the above embodiments, and various changes may be made without departing from the scope of the invention.
(a) Although the link member 16 as communicating member is provided separately from the first brake arm 11 and the second brake arm body 23 in the above embodiment, the link portion may be formed integrally therewith. In this case, the shoe width may be adjusted by another mechanism.
(b) Although the second cable mounting portion 12c to which the outer casing is mounted is provided in the second brake arm 12 in the above embodiment, the second cable mounting portion may be also provided on the bicycle side.
(c) Although the present invention has been described by employing the side-pull type caliper cable as an example in the above embodiments, the present invention is not limited thereto. For example, the present invention may be also applied to a center-pull type caliper brake and to hydraulic rim brakes, as detailed later herein.
(d) Although the biasing force adjustment mechanism is provided in the second brake arm 112 of the rear braking device 110 in the second embodiment, the biasing force adjustment mechanism may be also provided in the first brake arm. Alternatively, the biasing force adjustment mechanism may be provided in both the first brake arm and the second brake arm. Moreover, the biasing force adjustment mechanism may be also provided in the front braking device 10.
(e) Although the biasing force adjustment member 137 is rotated by using the hexagonal wrench in the above embodiment, the biasing force adjustment member 137 may be also manually rotated.

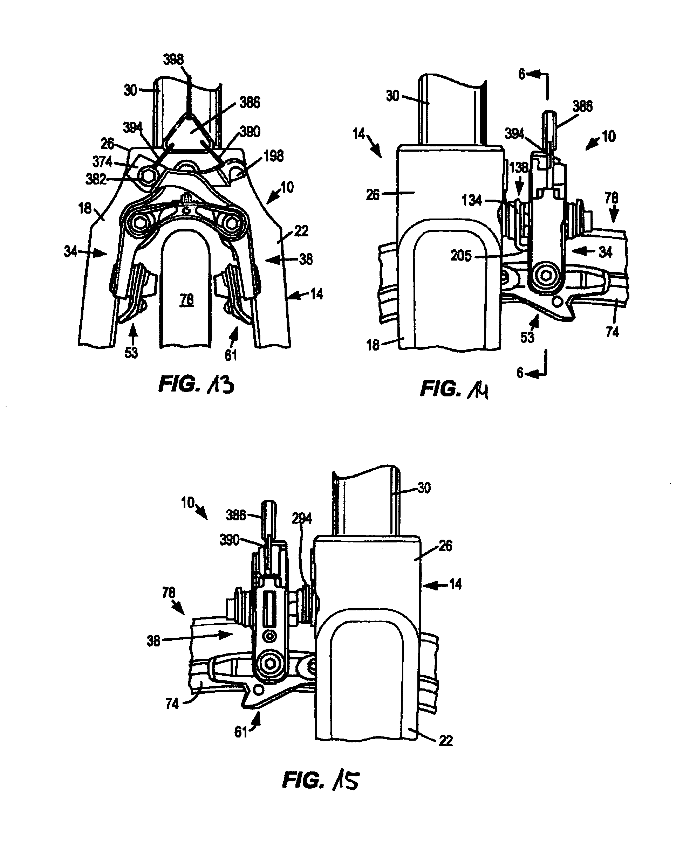

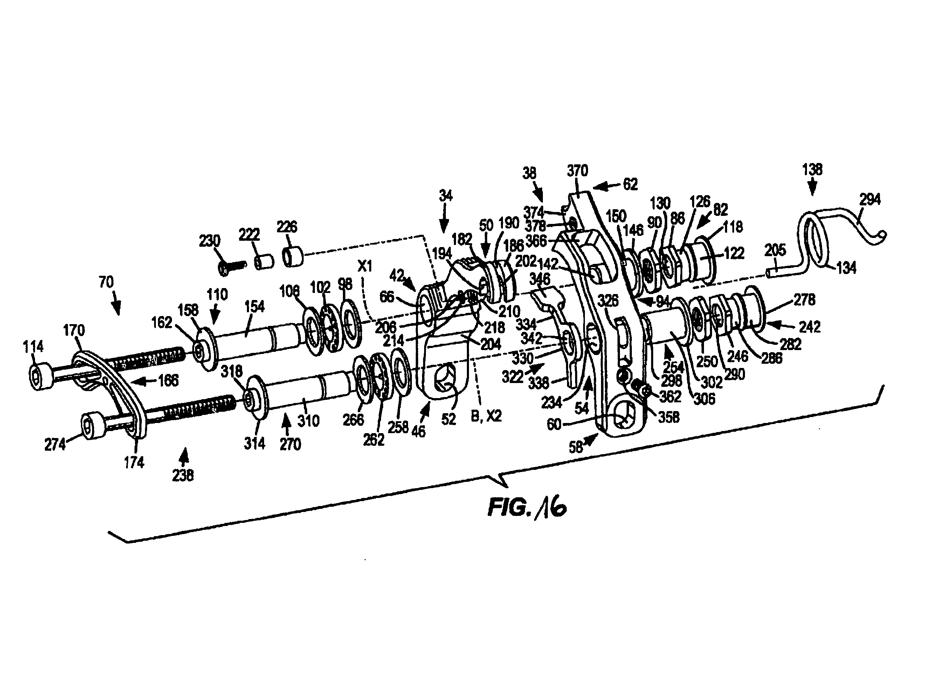

Fig. 13 is a front view of another embodiment not part of the claimed invention of a bicycle brake device 10 attached to a front fork 14 of a bicycle, Fig. 14 is a right side view of bicycle brake device 10, and Fig. 15 is a left side view of bicycle brake device 10. Front fork 14 has a typical structure wherein a first fork leg 18 and a second fork leg 22 extend downwardly from a bridging member 26 that is attached to a steering tube 30. Brake device 10 includes a first brake arm 34 and a second brake arm 38, wherein first brake arm 34 is rotatably mounted to first fork leg 18 and second brake arm 38 is rotatably mounted to second fork leg 22. As shown more clearly in Fig. 16, first brake arm 34 includes a first brake arm mounting portion 42 for mounting first brake arm 34 to first fork leg 18, a first brake pad mounting portion 46 and a first control interface portion such as a first control element attachment location such as a first cable mounting portion 50. First brake pad mounting portion 46 has a first brake pad mounting opening 52 for mounting a first brake pad 53 (Fig. 13) in a well-known manner. Similarly, second brake arm 38 includes a second brake arm mounting portion 54 for mounting second brake arm 38 to second fork leg 22, a second brake pad mounting portion 58 and a control interface portion such as a second control element attachment location such as a second cable mounting portion 62. Second brake pad mounting portion 58 has a second brake pad mounting opening 60 for mounting a second brake pad 61 in a well-known manner. As shown in Figs. 13-15, first brake pad 53 and second brake pad 61 are adapted to frictionally contact a rim portion 74 of a wheel 78.

First brake arm mounting portion 42 includes a first mounting opening 66 for receiving a first mounting assembly 70 therethrough. First mounting assembly 70 includes a tubular first mounting base 82, nuts 86, 90, a tubular first bushing 94, a washer 98, a spacer 102, a washer 106, a tubular first pivot axle 110, and a first mounting bolt 114. First mounting base 82 includes a first mounting flange 118, a first spring mounting portion 122, a first bushing mounting portion 126 and a first threaded opening 130. First mounting flange 118 is structured to be welded or otherwise attached to first fork leg 18. First spring mounting portion 122 is structured to extend through a coil 134 of a return spring 138, and first bushing mounting portion 126 is structured to be inserted into an opening 142 in first bushing 94. First bushing 94 includes a first flange 146 and a first arm mounting portion 150, wherein first flange 146 abuts against nut 90, and first arm mounting portion 150 extends through first mounting opening 66 in first brake arm mounting portion 42.

First pivot axle 110 includes a first tubular portion 154, a first flange 158, and a first gate bridge supporting portion 162. First tubular portion 154 extends through washer 106, spacer 102, washer 98, first arm mounting portion 150 of first bushing 94, and nuts 86 and 90 until first flange 158 abuts against washer 106. A gate bridge 166 includes a first gate bridge loop 170 and a second gate bridge loop 174, wherein first gate bridge loop 170 is structured to receive first gate bridge supporting portion 162 of first pivot axle 110 therein so that first gate bridge loop 170 abuts against first flange 158 of first pivot axle 110. First mounting bolt 114 extends through first pivot axle 110 and screws into first threaded opening 130 in first mounting base 82 to axially fix first brake arm 34 to first fork leg 18 so that first brake arm 34 is supported by first bushing 94 for rotation around a first pivot axis X1.

The upper portion of first brake arm 34 bends laterally inwardly from first brake arm mounting portion 42 and forms first cable mounting portion 50 at a distal end thereof. First cable mounting portion 50 includes plate-shaped, parallel and arcuate first and second end bead mounting claws 182 and 186 that form a substantially vertically-oriented cable receiving slot 190 therebetween. First end bead mounting claw 182 forms a first cable end bead receiving opening 194 for receiving a cable end bead 198 (Fig. 1) therein, and second end bead mounting claw 186 forms a second cable end bead receiving opening 202 for receiving cable end bead 198 therein.

A spring contacting surface 204 is formed on the laterally inner side surface of first brake arm 34 between first brake arm mounting portion 42 and first brake pad mounting portion 46 for contacting a first portion or spring end 205 of return spring 138. A pair of parallel, spaced-apart roller mounting ears 206 and 210 with corresponding mounting openings 214 and 218 are disposed on first brake arm 34 between first brake arm mounting portion 42 and first cable mounting portion 50. Mounting opening 214 is unthreaded, whereas mounting opening 218 is threaded. Mounting ears 206 and 210 are spaced apart for receiving a tubular spacer 222 and a tubular roller 226 therebetween. Spacer 222 and roller 226 are rotatably mounted between roller mounting ears 206 and 210 by a screw 230 that extends through mounting ear 206 and spacer 222 and screws into threaded opening 218. Roller 226 functions as a movement interface member in a manner discussed below.

Second brake arm mounting portion 54 includes a second mounting opening 234 for receiving a second mounting assembly 238 therethrough. Second mounting assembly 238 is substantially the same as first mounting assembly 70. Second mounting assembly 238 includes a tubular second mounting base 242, nuts 246, 250, a tubular second bushing 254, a washer 258, a spacer 262, a washer 266, a tubular second pivot axle 270, and a second mounting bolt 274. Second mounting base 242 includes a second mounting flange 278, a second spring mounting portion 282, a second bushing mounting portion 286 and a second threaded opening 290. Second mounting flange 278 is structured to be welded or otherwise attached to second fork leg 22. Second spring mounting portion 282 is structured to engage a second portion or spring end 294 of return spring 138, and second bushing mounting portion 286 is structured to be inserted into an opening 298 in second bushing 254. Second bushing 254 includes a second flange 302 and a second arm mounting portion 306, wherein second flange 302 abuts against nut 250, and second arm mounting portion 306 extends through second mounting opening 234 in second brake arm mounting portion 54.

Second pivot axle 270 includes a second tubular portion 310, a second flange 314, and a second gate bridge supporting portion 318. Second tubular portion 310 extends through washer 266, spacer 262, washer 258, second arm mounting portion 306 of second bushing 254, and nuts 246 and 250 until second flange 314 abuts against washer 266. Second gate bridge loop 174 of gate bridge 166 is structured to receive second gate bridge supporting portion 318 of second pivot axle 270 therein so that second gate bridge loop 174 abuts against second flange 314. Second mounting bolt 274 extends through second pivot axle 270 and screws into second threaded opening 290 in second mounting base 242 to axially fix second brake arm 38 to second fork leg 22 so that second brake arm 38 is supported by second bushing 254 for rotation around a second pivot axis X2.

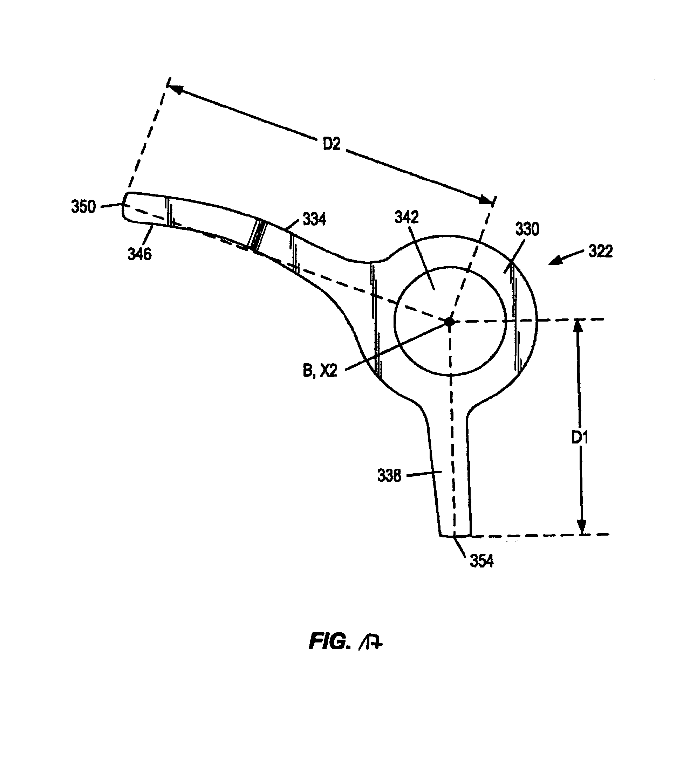

An interface member in the form of a communicating member 322 is structured and dimensioned to be mounted within a vertical mounting groove 326 formed in second brake arm mounting portion 54 of second brake arm 38. In this embodiment, second pivot axis X2 intersects mounting groove 326 so that communicating member 322 pivots around a communicating member pivot axis B that is coaxial with second pivot axis X2. As shown in Figs. 16 and 17, communicating member 322 is a continuous one-piece member that comprises a communicating member mounting portion 330, an axially-thin, rod-shaped first operating portion 338, and an axially-thick second operating portion 334, wherein communicating member mounting portion 330 is disposed between first operating portion 338 and second operating portion 334. As a result, first operating portion 338 is disposed between second brake arm mounting portion 54 and second brake pad mounting portion 58 of second brake arm 38 when communicating member 322 is mounted in mounting groove 326.

Communicating member mounting portion 330 is formed as an axially-thin, generally annular member having an opening 342 dimensioned to receive second arm mounting portion 306 of second bushing 254 therethrough. The end portion of second operating portion 334 is formed as an axially-thick, substantially square paddle 346 for engaging roller 226 mounted to first brake arm 34. The axially-thick, paddle-shaped second operating portion 334 helps to prevent mud and other foreign matter propelled upwardly from wheel 78 from impinging upon the control structures located above second control interface portion 334. Second operating portion 334, and particularly paddle 346, is dimensioned to extend substantially the entire distance from second brake arm 38 to first brake arm 34 when first brake arm 34 and second brake arm 38 are mounted to first and second fork legs 18 and 22, respectively. As shown in Fig. 17, first operating portion 338 has a first interface end 354, and second operating portion has 334 a second interface end 350. A distance D2 from communicating member pivot axis B to second interface end 350 is greater than a distance D1 from communicating member pivot axis B to first interface end 354.

A threaded opening 358 is formed in second brake arm 38 between second brake arm mounting portion 54 and second brake pad mounting portion 58 for receiving an adjustment member in the form of an adjustment screw 362 therein. The tip of adjustment screw 362 contacts first operating portion 338 of communicating member 322 for adjusting the relative position between first operating portion 338 and second brake arm 38 in a continuous manner.

A passage 366 in the form of an opening is formed in second brake arm 38 between second brake arm mounting portion 54 and second cable mounting portion 62. In this embodiment, passage 366 is formed as a substantially circumferentially-closed opening such as a completely circumferentially-closed opening. Passage 366 is dimensioned such that it is capable of receiving the portion of first brake arm 34 above first brake arm mounting portion 42 therethrough. As a result, when brake device 10 is viewed along first pivot axis X1 and second pivot axis X2, first brake arm 34 intersects second brake arm 38 so that first cable mounting portion 50 of first brake arm 34 and second cable mounting portion 62 of second brake arm 38 are located on opposite sides of the intersection.

Second cable mounting portion 62 of second brake arm 38 extends upwardly from passage 366 and includes a cable mounting wall 370 with a side surface 374, wherein a generally horizontally-oriented threaded opening 378 is formed at side surface 374 for receiving a cable mounting bolt 382 (Fig. 13) therein. First cable mounting portion 50 and second cable mounting portion 62 are configured such that, when brake device 10 is viewed perpendicular to first and second pivot axes X1 and X2 and first and second pivot axes X1 and X2 are horizontal, cable receiving slot 190 in first brake arm 34 substantially aligns with side surface 374 on second brake arm 38.

As shown in Figs. 13-15, in this embodiment not part of the claimed invention, an intermediate control element comprises a generally triangular control plate 386, a first intermediate control wire 390, and a second intermediate control wire 394. First intermediate control wire 390 has a first end attached to the lower right vertex of control plate 386 and a second end that extends through cable receiving slot 190 in first cable mounting portion 50 of first brake arm 34 and attaches to cable end bead 198. Second intermediate control wire 394 has a first end attached to the lower left vertex of control plate 386 and a second end attached to side surface 374 of second cable mounting portion 62 of second brake arm 38 by cable mounting bolt 382. A primary control element in the form of a primary control wire 398 is attached to the upper vertex of control plate 386.

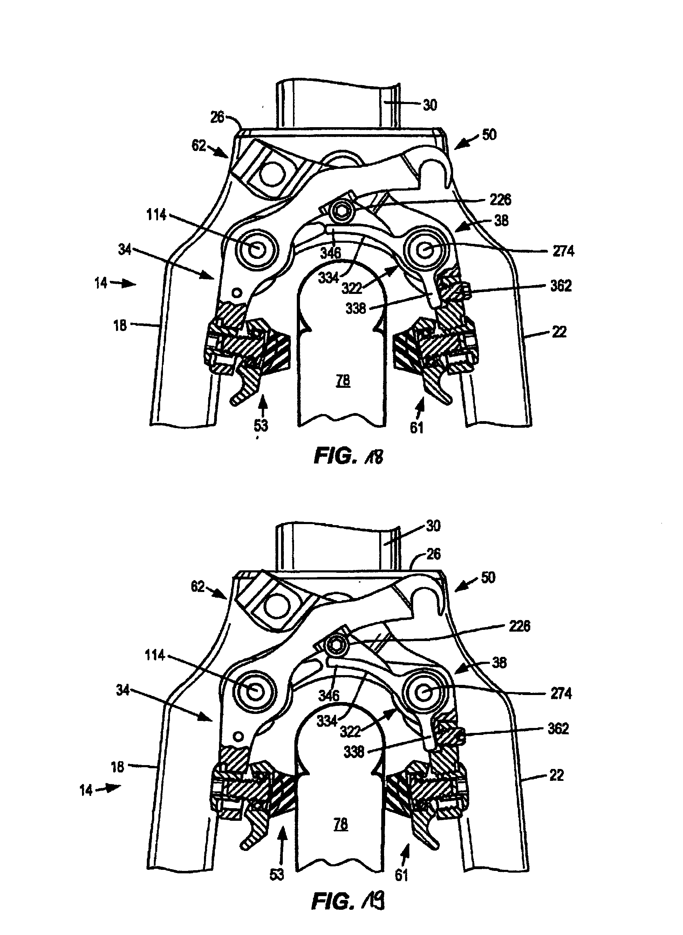

Operation of the device is shown in Figs. 18 and 19, wherein Fig. 18 is a partial cross-sectional view of brake device 10 in a brake-released position, and Fig. 19 is a partial cross-sectional view of brake device 10 in a brake-engaged position. When primary control wire 398 is pulled upwardly, first cable mounting portion 50 of first brake arm 34 and second cable mounting portion 62 of second brake arm 38 are pulled upwardly, thereby causing first brake arm 34 to rotate counterclockwise and causing second brake arm 38 to rotate clockwise. During that time, the tip of adjusting screw 362 presses against first operating portion 338 of communicating member 322, and paddle 346 of second operating portion 334 of communicating member 322 presses against roller 226 attached to first brake arm 34 to synchronize the movement of first brake arm 34 and second brake arm 38. Thus, communicating member 322 also functions as a synchronizing member that communicates rotational force between first brake arm 34 and second brake arm 38 so that first brake arm 34 moves synchronously with second brake arm 38.

When primary control wire 398 is released, return spring 138 biases first brake arm 34 clockwise to move first brake pad 53 to the brake released position. The clockwise rotation of first brake arm 34 is communicated to paddle 346 of second operating portion 334 of communicating member 322 via roller 226, thereby causing communicating member 322 to rotate counterclockwise. The counterclockwise rotation of communicating member 322 is communicated to adjusting screw 362 in second brake arm 38 via first operating portion 338 of communicating member 322, thereby causing second brake arm 38 to rotate counterclockwise to move second brake pad 61 to the brake released position. Unlike prior art brake devices, only one return spring is required to rotate both first brake arm 34 and second brake arm 38 to the brake released positions. Second brake arm 38 is unbiased except for the biasing force from return spring 138 received from communicating member 322. As a result, less operating force is required to operate brake device 10. Furthermore, as shown in Fig. 5, since distance D2 from communicating member pivot axis B to second interface end 350 is greater than a distance D1 from communicating member pivot axis B to first interface end 354, communicating member 322 functions as a lever that provides a mechanical advantage so that the biasing force of return spring 138 is efficiently communicated from first brake arm 34 to second brake arm 38. Finally, the position of first brake pad 53 relative to second brake pad 61 may be adjusted easily using adjusting screw 362 to assure symmetrical positioning of first brake pad 53 and second brake pad 61 relative to wheel 78.

Since cable receiving slot 190 in first brake arm 34 substantially axially aligns with side surface 374 on second brake arm 38 when brake device 10 is viewed perpendicular to first and second pivot axes X1 and X2, first intermediate control wire 390 likewise axially aligns with second intermediate control wire 394. As a result, the axial forces applied to first brake arm 34 and second brake arm 38 by first intermediate control wire 390 and second intermediate control wire 394 are balanced, and torsional forces applied to first intermediate control wire 390 and second intermediate control wire 394 are reduced, thereby reducing wear on the control wires. Furthermore, in this embodiment, first intermediate control wire 390 and second intermediate control wire 394 are substantially axially centered relative to first brake arm 34 and second brake arm 38 when brake device 10 is viewed perpendicular to first and second pivot axes X1 and X2. This configuration further balances the axial forces applied to first brake arm 34 and second brake arm 38.

While the above is a description of various embodiments of inventive features, further modifications may be employed without departing from the scope of the present invention. For example, communicating member 322 need not be mounted within mounting groove 326. Communicating member 322 could be mounted outside second brake arm 38, or communicating member 322 could be mounted on or about first brake arm 34. Other adjusting members could be provided for adjusting the relative position between second brake arm 38 and first operating portion 338 of communicating member 322. For example a spacer or some other member or structure could be disposed between second brake arm 38 and first operating portion 338 for adjusting the relative position between second brake arm 38 and first operating portion 338 in a discrete or step-wise manner. Passage 366 need not be formed as a bounded opening as long as passage 366 accommodates the passage of first brake arm 34 therethrough.

While brake device 10 was operated using primary control wire 398, control plate 386, first intermediate control wire 390 and second intermediate control wire 394, the bias communicating function and/or the synchronizing function performed by communicating member 322 may be applied to other braking devices such as the embodiments described below.

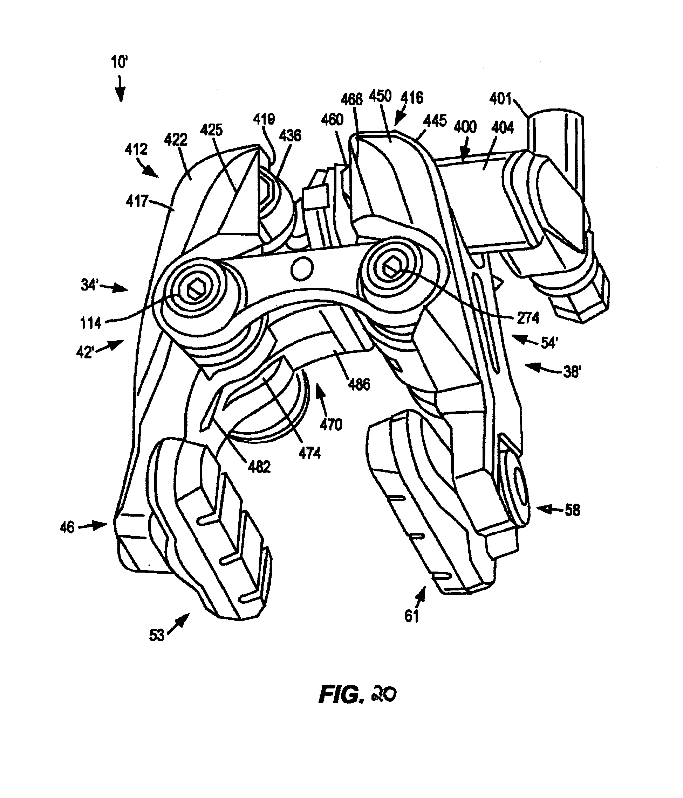

Figs. 20-28 illustrate further embodiments not part of the claimed invention of a brake device 10' that includes inventive features. These embodiments include a first brake arm 34' and a second brake arm 38'. First brake arm 34' and second brake arm 38' share many features of first brake arm 34 and second brake arm 38 in the first embodiment, so only the differences will be described. Features that are the same as the first embodiment are numbered the same.

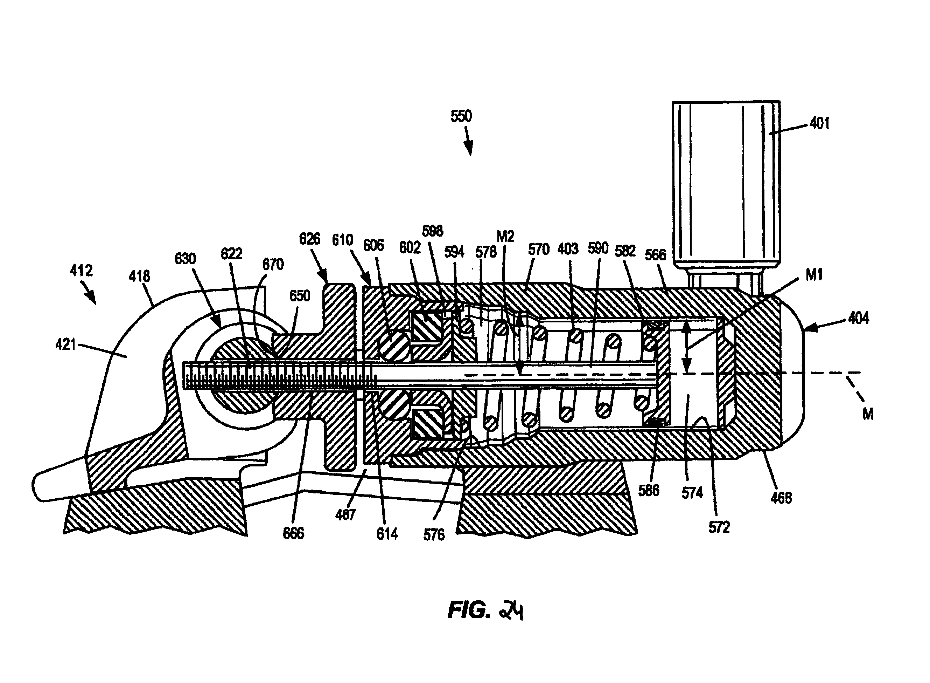

First brake arm 34' and second brake arm 38' are operated by a piston assembly 400 that receives hydraulic fluid from a hydraulic fluid line 401 and selectively extends and retracts a T-shaped output shaft in the form of a piston shaft 402 in response to the pressure of hydraulic fluid received through hydraulic fluid line 401. Piston shaft 402 is biased towards a retracted position by a return spring 403 (Fig. 24) disposed within a housing 404 of piston assembly 400 in a well-known manner.

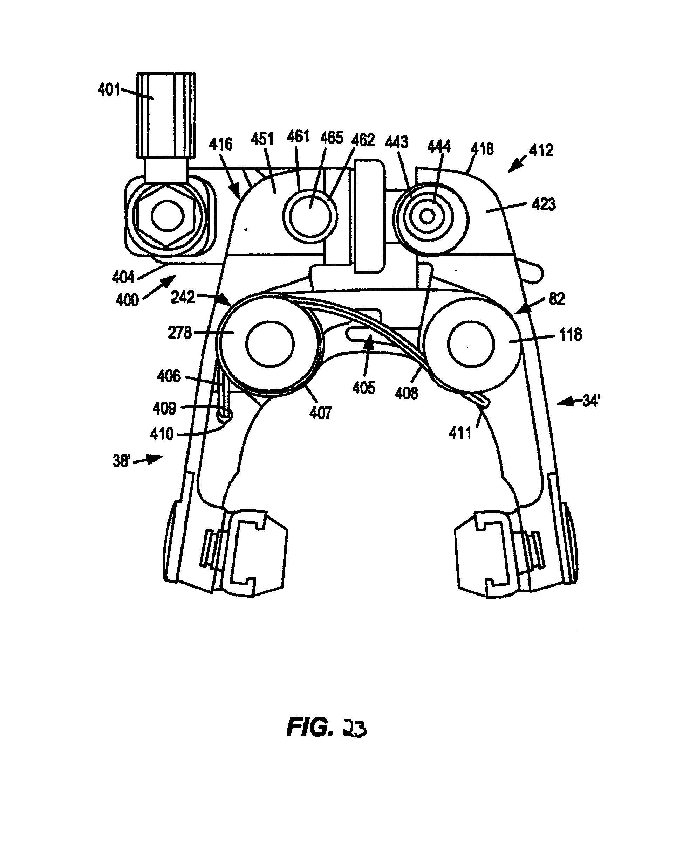

As shown in the rear view of brake device 10' in Fig. 23, return spring 138 in the first embodiment has been replaced by a return spring 405. In this embodiment, return spring 405 has a first portion or first spring end 406, a coiled portion 407, and a second portion or second spring end 408. First spring end 406 includes a first end tip 409, wherein first end tip 409 is inserted into an opening 410 in second brake arm 38'. Coiled portion 407 of return spring 405 coils around second spring mounting portion 282 (Fig. 16) of second mounting base 242, and second spring end 408 contacts first spring mounting portion 122 (Fig. 16) of first mounting base 82 so that a second end tip 411 of second spring end 408 is freely disposed at first brake arm 34'. As a result, second brake arm 38' is biased clockwise in Fig. 23, whereas first brake arm 34' is not rotationally biased.

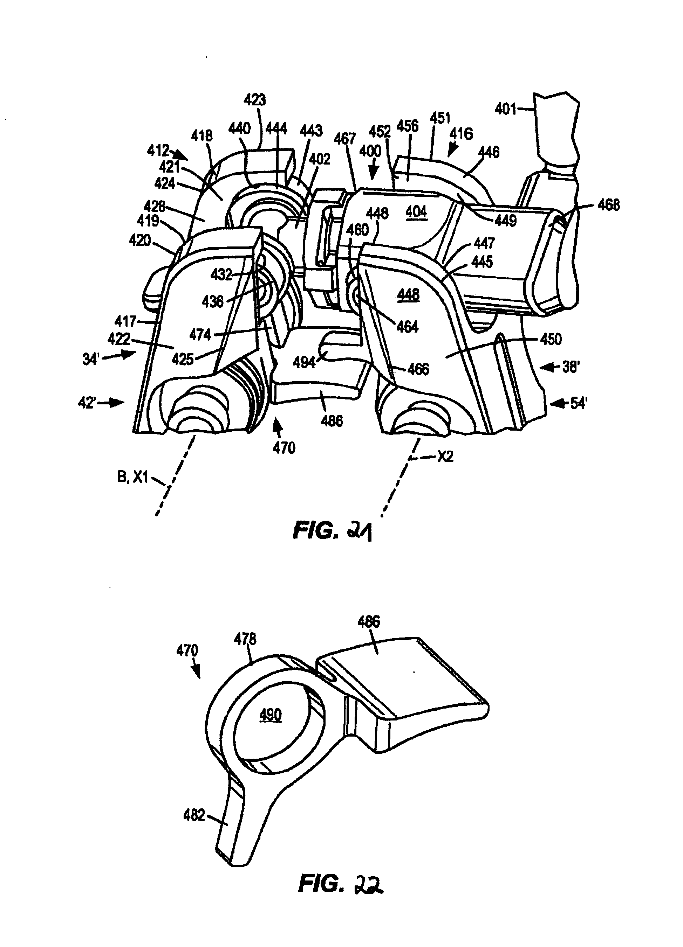

As shown more clearly in Figs 21 and 23, to accommodate piston assembly 400, first brake arm 34' includes a first control interface portion 412, and second brake arm 38' includes a second control interface portion 416. First control interface portion 412 includes first and second mounting members in the form of first and second walls 417 and 418 that form a substantially vertically-oriented slot 428 therebetween. First wall 417 includes a first interior surface 419 that faces a second interior surface 421 of second wall 418. First wall 417 further includes a first exterior surface 422 opposite first interior surface 419, and second wall 418 includes a second exterior surface 423 opposite second interior surface 421. First and second couplings in the form of parallel and arcuate first and second shaft mounting claws 420 and 424 are disposed at first and second walls 417 and 418, respectively. First shaft mounting claw 420 forms a first cartridge bearing receiving recess 432 for receiving a first cartridge bearing 436 therein, and second shaft mounting claw 424 forms a second cartridge bearing receiving opening 440 for receiving a second cartridge bearing 444 and a spacer bushing 443 therein. First cartridge bearing 436 and second cartridge bearing 444 are rotatably supported on opposite ends of the T-shaped piston shaft 402.

In this embodiment, first shaft mounting claw 420 is mounted to first interior surface 419 of first wall 417 so as to be disposed entirely at first interior surface 419 and not to penetrate first wall 417. As a result, second surface 422 of first wall 417 covers first shaft mounting claw 420 when viewed for the front to help prevent foreign matter from being deposited at first shaft mounting claw 420. Preferably, but not necessarily, second surface 422 is convex and has a ridge in the form of a culminating crest 425 at an intermediate portion thereof to improve aesthetic appearance and aerodynamics of the brake assembly. Unlike first shaft mounting claw 420, second shaft mounting claw 424 penetrates through second wall 418 to facilitate mounting first and second cartridge bearings 436 and 444 and spacer bushing 443.

Second control interface portion 416 likewise includes first and second mounting members in the form of first and second walls 445 and 446 that form a substantially vertically-oriented slot 456 therebetween and having sufficient width to receive housing 404 of piston assembly 400 therein. First wall 445 includes a first interior surface 447 that faces a second interior surface 449 of second wall 446. First wall 445 further includes a first exterior surface 450 opposite first interior surface 447, and second wall 446 includes a second exterior surface 451 opposite second interior surface 449. First and second couplings in the form of parallel and arcuate first and second shaft mounting claws 448 and 452 are disposed at first and second walls 445 and 446, respectively. First shaft mounting claw 448 forms a first cartridge bearing receiving recess (not shown, but similar to first cartridge bearing receiving recess 432) for pivotably receiving an annular first bushing 460 therein, and second shaft mounting claw 452 forms a second cartridge bearing receiving opening 461 (Fig. 23) for pivotably receiving an annular second bushing 462 therein. First bushing 460 is mounted to a first mounting shaft 464 that extends from the side of housing 404, and second bushing 462 is similarly mounted to a second mounting shaft 465 extending from the opposite side of housing 404.

In this embodiment, first shaft mounting claw 448 is mounted to first interior surface 447 of first wall 445 of second control interface portion 416 so as to be disposed entirely at first interior surface 447 and not to penetrate first wall 445. As a result, first exterior surface 450 of first wall 445 covers first shaft mounting claw 448 when viewed from the front to help prevent foreign matter from being deposited at first shaft mounting claw 448. Preferably, but not necessarily, first exterior surface 450 is convex and has a ridge in the form of a culminating crest 466 at an intermediate portion thereof to improve aesthetic appearance and aerodynamics of the brake assembly. Unlike first shaft mounting claw 448, second shaft mounting claw 452 penetrates through second wall 446 to facilitate mounting first and second bushings 460 and 462.

As shown more clearly in Fig. 21, housing 404 of piston assembly 400 has a first axial end 467 and a second axial end 468, and second control interface portion 416 of second brake arm 38' is coupled to housing 404 (via first and second bushings 460 and 462 and first and second mounting shafts 464 and 465) between first axial end 467 of housing 404 and second axial end 468 of housing 404, in particular at a location displaced towards first axial end 467 of housing 404 away from second axial end 468 of housing 404. Preferably, but not necessarily, second control interface portion 416 of second brake arm 38' is coupled to housing 404 at a location closer to first axial end 467 than second axial end 468. Even more preferably, second control interface portion 416 of second brake arm 38' is coupled to housing 404 in close proximity to first axial end 467.

In this embodiment, a communicating member 470 is structured and dimensioned to be mounted within a vertical mounting groove 474 formed in first brake arm mounting portion 42' of first brake arm 34'. In this embodiment, first pivot axis X1 intersects mounting groove 474 so that communicating member 470 pivots around a communicating member pivot axis B that is coaxial with first pivot axis X1. As shown in Fig. 22, communicating member 470 is a continuous one-piece member that comprises an axially-thin communicating member mounting portion 478, an axially-thin, rod-shaped first operating portion 482, and an axially-thick second operating portion 486, wherein communicating member mounting portion 478 is disposed between first operating portion 482 and second operating portion 486. As a result, first operating portion 482 is disposed between first brake arm mounting portion 42' and first brake pad mounting portion 46 of first brake arm 34' when communicating member 470 is mounted in mounting groove 474.

Communicating member mounting portion 478 is formed as an axially-thin generally annular member having an opening 490 dimensioned to receive first arm mounting portion 150 (Fig. 16) of first bushing 94 therethrough. Second operating portion 486 is formed as an axially-thick substantially square paddle cam for engaging a thin rod-shaped cam follower 494 mounted to second brake arm 38' between second brake arm mounting portion 54' and second control interface portion 416. Second operating portion 486, and particularly the paddle-shaped portion, is dimensioned to extend substantially the entire distance from first brake arm 34' to second brake arm 38' when first brake arm 34' and second brake arm 38' are mounted to first and second fork legs 18 and 22, respectively. As in the first embodiment, the axially-thick paddle-shaped second operating portion 486 helps to prevent mud and other foreign matter propelled upwardly from wheel 78 from impinging upon the control structures located above second operating portion 486. In this case, second operating portion 486 helps to prevent mud and other foreign matter from impinging upon piston shaft 402 and housing 404 to minimize the chance that such foreign matter wears out the seals in housing 404 or otherwise interferes with the operation of piston shaft 402.

When piston assembly 400 extends piston shaft 402 to bias first brake arm 34' to rotate counterclockwise, the side of first brake arm 34' presses against first operating portion 482 of communicating member 470, and second operating portion 486 of communicating member 470 presses against cam follower 494 attached to second brake arm 38' to communicate biasing force from piston shaft 402 to second brake arm 38' and to synchronize the movement of first brake arm 34' and second brake arm 38'.

When piston assembly 400 retracts piston shaft 402, return spring 405 biases second brake arm 38' to rotate counterclockwise, the counterclockwise rotation of second brake arm 38' is communicated to second operating portion 486 of communicating member 470 via cam follower 494, thereby causing communicating member 470 to rotate clockwise. The clockwise rotation of communicating member 470 is communicated to first brake arm 34' via first operating portion 482 of communicating member 470, thereby causing first brake arm 34' to rotate clockwise to move first brake pad 53 to the brake released position and to synchronize the movement of first brake arm 34' and second brake arm 38'.

Figs. 24-26 are detailed views of an alternative embodiment of a piston assembly 550. Piston assembly 550 is the same as piston assembly 400 in the first embodiment except as noted below, and structures that already have been described have been given the same reference numbers. As shown in Fig. 24, piston assembly 550 includes a housing 554 having a first axial end 558 and second axial end 468. Housing 404 includes a first wall 566 and a second wall 570, wherein an inner surface 572 of first wall 566 defines a hollow cylindrical piston chamber 574, and an inner surface 576 of second wall 570 defines a hollow accumulator chamber 578. Accumulator chamber 578 is in fluid communication with and in close proximity to (e.g., adjacent to) piston chamber 574 and is disposed between piston chamber 574 and first end 467 of housing 404.

A piston 582 is disposed within piston chamber 578, wherein a circular rubber lip seal 586 is fitted around piston 582 for slidably and sealingly fitting piston 582 within piston chamber 578 for movement along a movement axis M. A distance M1 from movement axis M to inner surface 572 first wall 566 is substantially constant to form a cylinder along substantially the entire range of motion of piston 582 along movement axis M. However, in this embodiment, a distance M2 from movement axis M to inner surface 576 of second wall 570 is greater than distance M1 from movement axis M to inner surface 572 of first wall 566. Furthermore, distance M2 from movement axis M to inner surface 576 of second wall 570 increases in a direction towards first end 467 of housing 54 so that accumulator chamber 578 has a stepped shape that forms a generally conical shape such as a frusto-conical shape. It should be apparent from Figs. 21, 24 and 25 that second control interface portion 416 of second brake arm 38' in both embodiments is coupled to housing 404 at a location displaced towards first axial end 467 of housing 404 away from an axial position of piston 582.

An output shaft in the form of a piston shaft 590 is coupled to piston 582 for movement therewith along movement axis M, wherein piston shaft 590 extends through a spring supporting member 594, through a seal support member 598 that supports a bushing 602, and through a rubber O-ring seal 606 mounted in an end cap 610 that is screwed into first end 467 of housing 404. End cap 610 has an opening 614 for receiving piston shaft 590 therethrough so that piston shaft 590 extends through first end 467 of housing 404 to a location outside of housing 404. A 113 in the form of coil return spring 403 mentioned above is disposed in accumulator chamber 578 and piston chamber 574 and is positioned between piston 582 and spring supporting member 594 so that return spring 403 is disposed between piston 582 and first end 467 of housing 404 to bias piston 582 towards second end 468 of housing 404. In this embodiment, return spring 403 has a generally conical shape. Using a conical shape for return spring 403 allows a shorter return spring to be used compared to a cylindrically-shaped return spring. As a result, the axial length of housing 404 may be reduced to provide a more compact structure.

It should be readily apparent that the increased diameter of accumulator chamber 578 relative to piston chamber 574 allows accumulator chamber 578 to accumulate any external debris that may pass through O-ring seal 606. As a result, such debris is prevented from entering piston chamber 574 where the debris could wear or damage inner surface 572 of piston chamber 574 and/or lip seal 586 of piston 582 as a result of the axial movement of piston 582.

As noted above, the structure of piston assembly 550 is substantially the same as piston assembly 400 in the first embodiment. The main difference lies in the structure of piston shaft 590. As shown in Figs. 24-26, unlike piston shaft 402 in the first embodiment, piston shaft 590 has a straight threaded end portion 622 that extends through an adjusting member 626 located outside of housing 404 and through a coupling member in the form of a coupling shaft in the form of a cross-dowel 630.

Cross dowel 630 is a generally cylindrical member having smaller-diameter cylindrical end portions 634 and 638, a larger diameter cylindrical central portion 642, and a central coupling opening 646. End portions 634 and 638 are fitted within first and second cartridge bearings 436 and 444, respectively, for coupling cross-dowel 630 to first control interface portion 412 of first brake arm 34'. Coupling opening 646 is an unthreaded opening dimensioned to receive end portion 622 of piston shaft 590 therethrough so that end portion 622 can freely move back and forth within coupling opening 646 along movement axis M. The convex outer peripheral surface of central portion 642 in close proximity to (e.g., adjacent to) coupling opening 646 forms a pair of first control interface portion detent surfaces 650.

Adjusting member 626 comprises a cylindrical adjusting nut 658 and a housing indexing structure 660 in the form of a plurality of (e.g., four) radially outwardly extending adjusting member detent members in the form of indexing arms 662 that selectively engage corresponding housing detent members in the form of flats 610a on end cap 610. Each indexing arm 662 comprises a radially outwardly extending portion 662a and an axially extending portion 662b, wherein radially outwardly extending portion 662a extends radially outwardly from movement axis M, and axially extending portion 662b is a plate-shaped member that extends parallel to movement axis M. In this embodiment, a radius of an inner surface 662c of each axially extending portion 662b is slightly greater than a radius of its corresponding flat 610a and slightly less than a radius of an adjacent rounded portion 610b of end cap 610 so that the plurality of axially extending portions 662b loosely engage the plurality of flats 610a and are held in place primarily by the boundaries set by rounded portions 610b of end cap 600.

Adjusting nut 658 has a threaded inner peripheral surface 666 (Fig. 24) that screws onto the threaded outer peripheral surface of end portion 622 of piston shaft 590 so that adjusting nut 658 can move relative to piston shaft 590 in a continuous manner. Adjusting nut 658 also has an indexing structure in the form of a plurality of (e.g., four) concave adjusting member detent surfaces 670 evenly spaced around the axial end face 674 of adjusting nut 658 to index a position of adjusting nut 658, and hence adjusting member 626, relative to cross-dowel 630. More specifically, each adjusting member detent surface 670 has the shape of a longitudinally truncated cylinder whose axis extends radially from movement axis M, and the four adjusting member detent surfaces 670 are spaced 90° from each other so that opposite pairs of detent surfaces 670 can engage the opposed first control interface portion detent surfaces 650 on cross-dowel 630. As a result, adjusting member 626 can be rotationally held in position relative to cross-dowel 630 in 90° increments. Of course, more adjusting member detent surfaces 670 could be provided if it is desired to rotationally hold adjusting member 626 relative to cross-dowel 630 in finer increments.

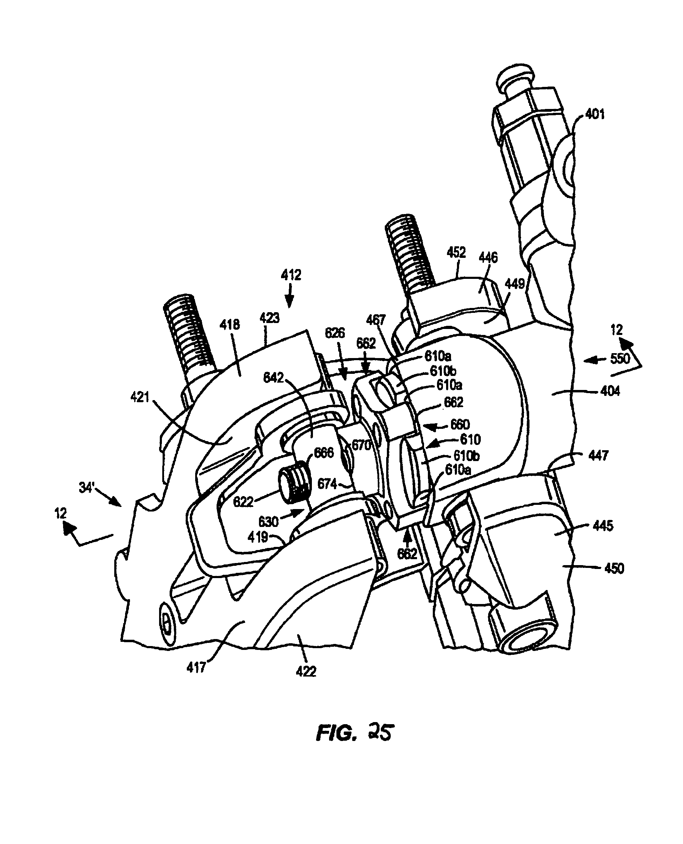

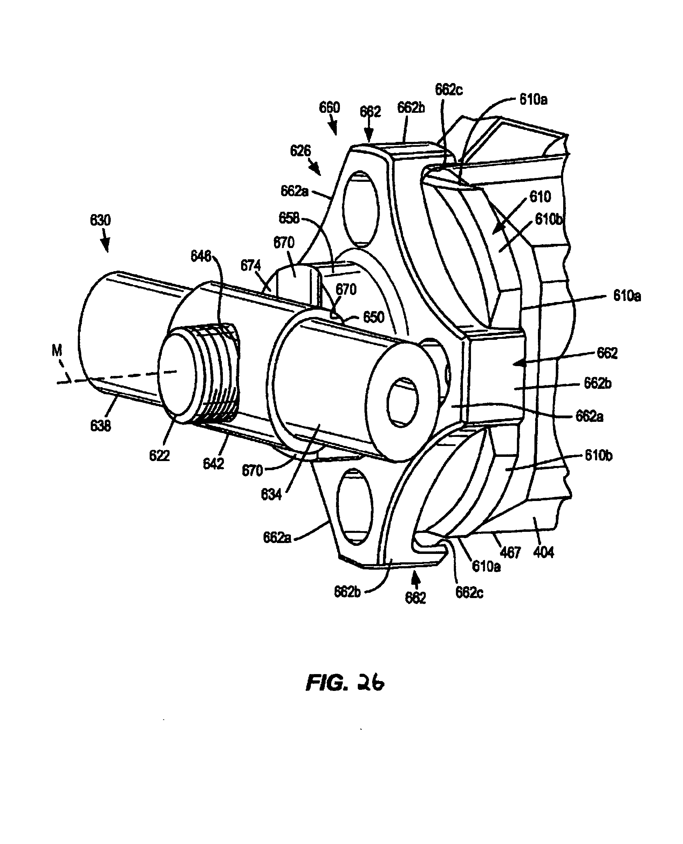

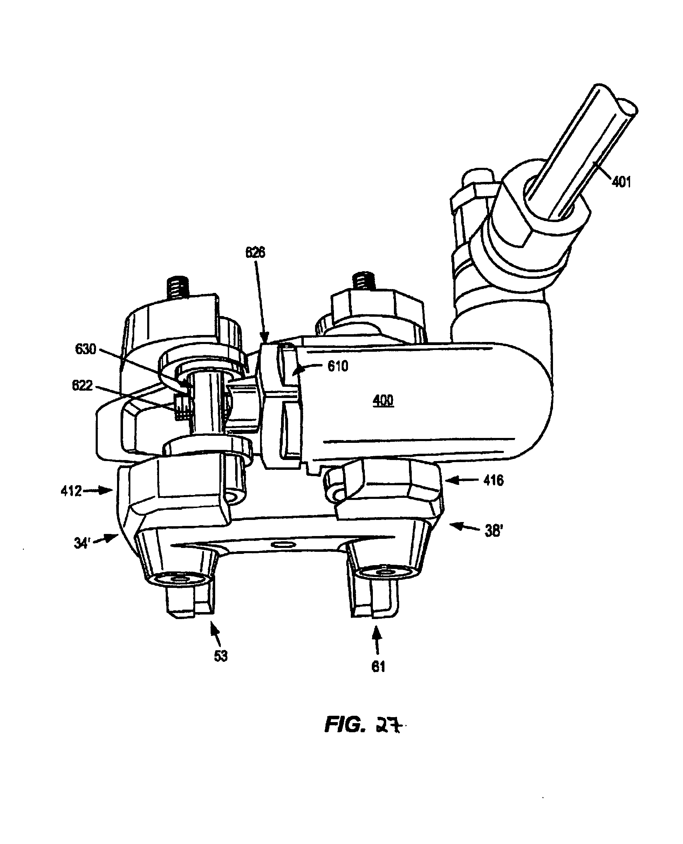

Since adjusting nut 658 threadingly engages piston shaft 590, rotating adjusting member 626 causes adjusting member 626 to adjust its axial position relative to piston shaft 590 in a continuous manner. Rotating adjusting member 626 clockwise in Figs. 25 and 26 causes adjusting member 626 to move towards end cap 610 of housing 404. During that time, axially extending portions 662b of housing indexing structure 660 disengage from their currently engaged flats 610a of end cap 610 and frictionally slide over the adjacent rounded portions 610b of end cap 610 until axially extending portions 662b engage the next adjacent flats 610a. At the same time, adjusting member detent surfaces 670 disengage from their corresponding first control interface portion detent surfaces 650, and end face 674 of adjusting nut 658 frictionally slides over first control interface portion detent surfaces 650 until the following pair of rotationally adjacent adjusting member detent surfaces 670 engage first control interface portion detent surfaces 650. As a result, adjusting member 626 now is closer to end cap 610 of housing 404. Since return spring 405 biases second control interface portion 416 of second brake arm 38' towards first control interface portion 412 of first brake arm 34', first control interface portion 412 of first brake arm 34' moves towards second control interface portion 416 of second brake arm 38', piston shaft 590 slidingly extends further into coupling opening 646 of cross-dowel 630, and the axial length of piston shaft 590 between end cap 610 and cross-dowel 630 is reduced as shown in Fig. 27. At the same time, first brake pad mounting portion 46 of first brake arm 34' moves away from second brake pad mounting portion 58 of second brake arm 38' to the position shown in Fig. 27.

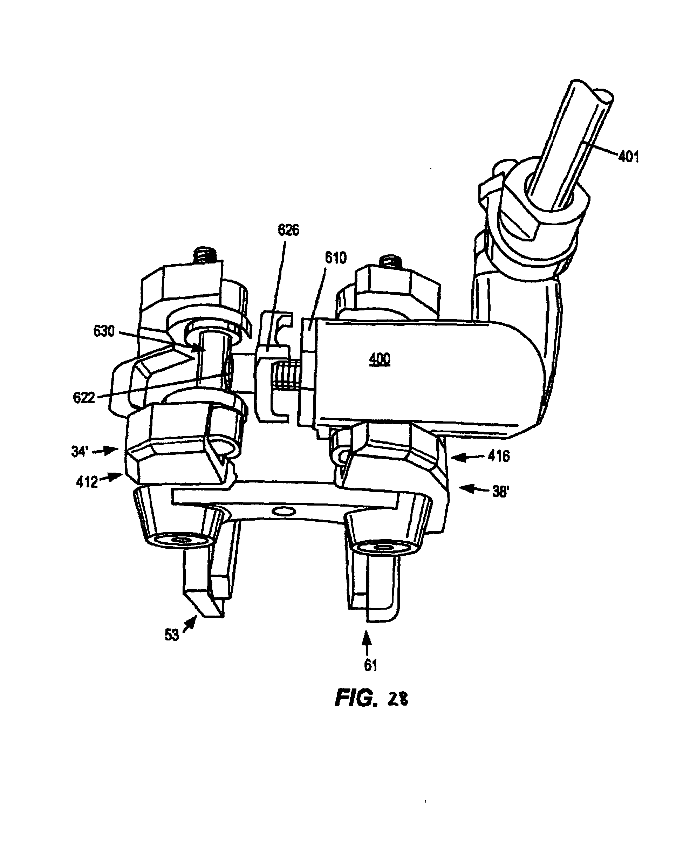

Rotating adjusting member 626 counterclockwise in Figs. 13 and 14 causes adjusting member 626 to move away from end cap 610 of housing 404. During that time, first control interface portion 412 of first brake arm 34' moves away from second control interface portion 416 of second brake arm 38', piston shaft 590 slidingly retracts into coupling opening 646 of cross-dowel 630, and the axial length of piston shaft 590 between end cap 610 and cross-dowel 630 is increased as shown in Fig. 28. At the same time, first brake pad mounting portion 46 of first brake arm 34' moves towards second brake pad mounting portion 58 of second brake arm 38' to the position shown in Fig. 28.

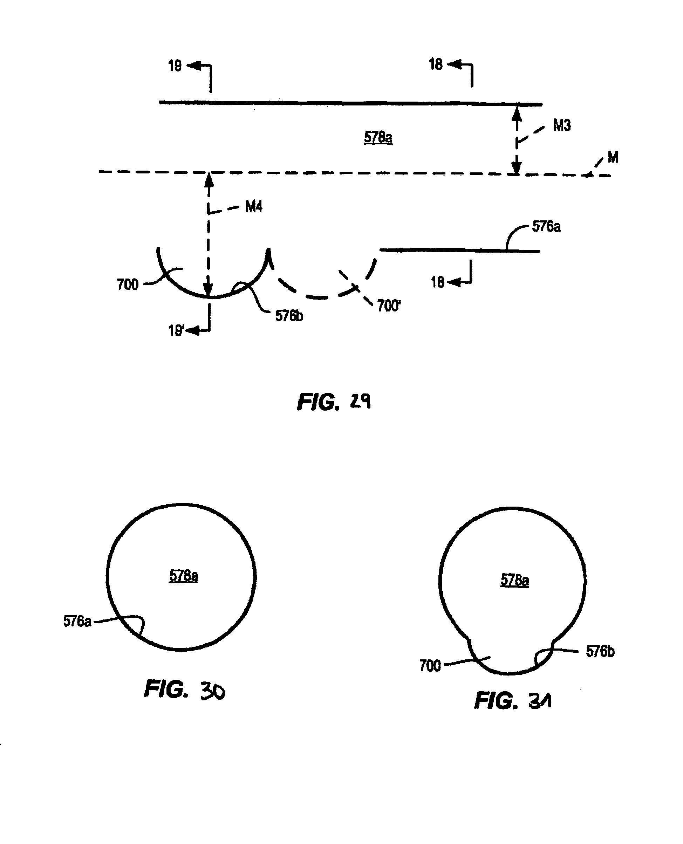

In the above embodiments, the size, shape, location or orientation of the various components may be changed as desired. For example, while distance M2 from inner surface 576 of accumulator chamber 578 to movement axis M in Fig. 24 uniformly increased in all radial directions so that accumulator chamber 578 had a generally frusto-conical shape, accumulator chamber 578 may have many different shapes to accumulate debris. For example, in an accumulator chamber 578a schematically shown in Fig. 29, a distance M3 from movement axis M to an inner surface 576a of accumulator chamber 578a is substantially constant to form a cylinder as shown schematically in Figs. 29 and 30. However, a distance M4 from movement axis M to an inner surface 576b of accumulator chamber 578a is greater than distance M3 to form a generally semispherical concavity 700 as shown schematically in Figs. 29 and 31. Concavity 700 preferably is located at the lower portion of the leftmost end of accumulator chamber 578a as shown in Fig. 29 so that debris that passes through O-ring seal 606 may accumulate in concavity 700. Of course, concavity 700 may be located at any desired axial position as shown in broken lines by concavity 700' in Fig. 29, depending upon the application, and the actual lower portion of accumulator chamber 578a usually depends on the configuration of the overall brake assembly.

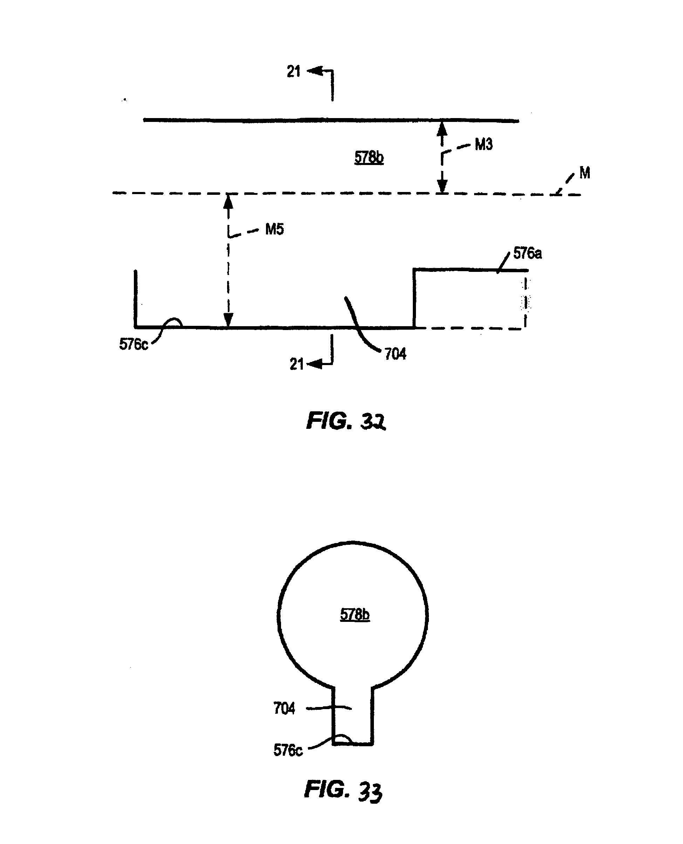

In an accumulator chamber 578b schematically shown in Fig. 32, a distance M3 from movement axis M to inner surface 576a of accumulator chamber 578b again is substantially constant to form a cylinder as in the embodiment shown in Fig. 29. However, a distance M5 from movement axis M to an inner surface 576c of accumulator chamber 578b is greater than distance M3 to form a concavity 704 in the form of a generally rectangular-shaped, axially-elongated groove as shown schematically in Figs. 32 and 33. As in the embodiment shown in Fig. 29, concavity 704 preferably is located at the lower portion of the leftmost end of accumulator chamber 578b so that debris that passes through O-ring seal 606 may accumulate in concavity 704. While concavity 704 is shown extending only partially along the lower surface of accumulator chamber 578b, concavity 704 may extend along the entire lower surface of accumulator chamber 578b as shown by the broken line in Fig. 32.

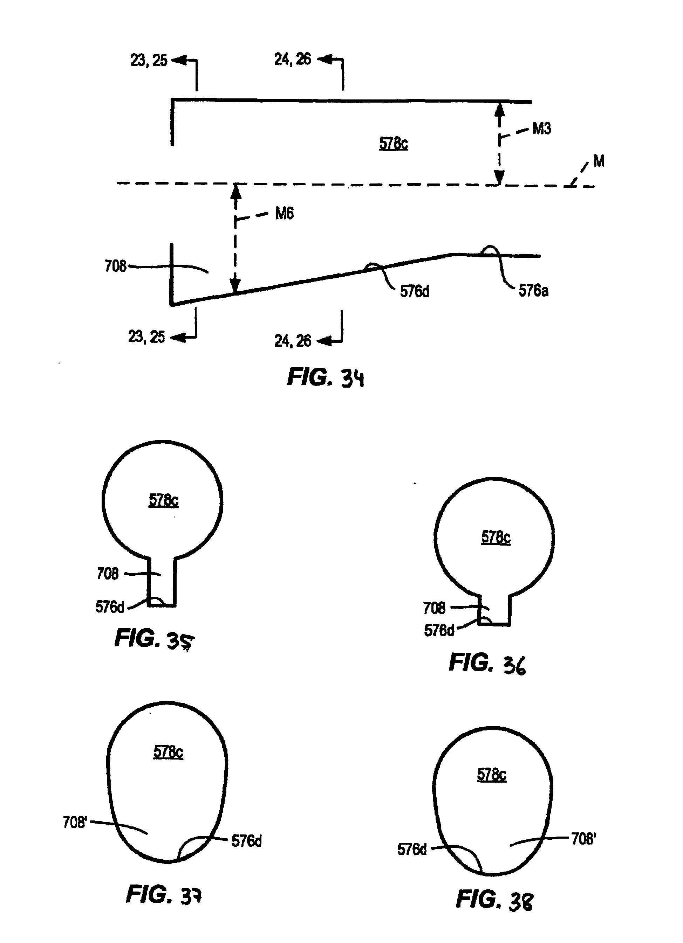

In an accumulator chamber 578c schematically shown in Fig. 34, a distance M3 from movement axis M to inner surface 576a of accumulator chamber 578c again is substantially constant to form a cylinder as in the embodiment shown in Fig. 29. However, an inner surface 576d of accumulator chamber 578c is slanted relative to surface 576a and movement axis M so that a distance M6 from movement axis M to inner surface 576d increases axially M3 to form a concavity 708 with a slanted bottom surface. In this embodiment, concavity 708 may have the form of a generally rectangular-shaped, axially-elongated, decreasing-radius groove as shown schematically in Figs. 34-36, but the concavity may have any desired shape such as a generally arcuately-shaped, axially-elongated, decreasing-radius groove concavity 708' shown schematically in Figs. 34, 31 and 32. While slanted surface 576d is shown extending only partially along the lower surface of accumulator chamber 578c, slanted surface 576d may extend along the entire lower surface of accumulator chamber 578c as desired.

Components that are shown directly connected or contacting each other may have intermediate structures disposed between them. Separate components may be combined, and vice versa. The functions of one element may be performed by two, and vice versa. The function of one element may be performed by another, and functions may be interchanged among the elements. For example, piston shaft 590 in the second embodiment may screw into cross-dowel 630 so that adjusting member 626 operates by abutting against end cap 610 of housing 404 so that rotation of adjusting member 626 causes piston shaft 590 to extend and retract relative to housing 404. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Terms of degree such as "substantially," "about" and "approximately" as used herein include a reasonable amount of deviation of the modified term such that the end result is not significantly changed. Thus, the scope of the invention should not be limited by the specific structures disclosed or the apparent initial focus or emphasis on a particular structure or feature.

## Claims

1. A bicycle braking device comprising:
a first brake arm (111) having a first mounting portion (111a) pivotally mountable to a bicycle frame, a first brake shoe mounting portion (111b) to which a first brake shoe is mounted, and a first cable mounting portion (111c) to which a brake operating cable is mounted;
a second brake arm (112) having a second mounting portion (112a) pivotally mountable to the bicycle frame, and a second brake shoe mounting portion (112b) to which a second brake shoe is mounted;
a biasing member (115) biasing the first brake arm (111) and the second brake arm (112) in a direction in which the first brake shoe mounting portion and the second brake shoe mounting portion are separated from each other, wherein the biasing member (115) is a coil spring; and
a communicating member (116) which allows the first brake arm and the second brake arm to pivot in synchronization,
a biasing force adjustment mechanism (119) provided at least on one of the first portion and the second portion of the biasing member to adjust a biasing force of the biasing member,
wherein the biasing force adjustment mechanism (119) has a biasing force adjustment member (137) rotatably supported by at least one of the first brake arm and the second brake arm and has a spiral spring holding groove (137a), wherein the coil spring (115) is held along the spring holding groove,
**characterized in that**
wherein the biasing force adjustment mechanism (119) adjusts the biasing force by rotating the biasing force adjustment member (137) and thereby moving the coil spring (115) along the spring holding groove (137a) with respect to the biasing force adjustment member.

2. The apparatus according to claim 1, wherein the biasing member (115) has a first portion and a second portion;
wherein the first portion of the biasing member (115) is operatively coupled to the first brake arm (111) and the second portion of the biasing member is operatively coupled to the second brake arm (112).

3. The apparatus according to claim 1, wherein the first mounting portion (111a) is adapted to mount to the bicycle frame for pivoting around a first pivot axis, and wherein the second brake arm mounting portion (112a) is adapted to mount to the bicycle frame for pivoting around a second pivot axis.

4. The apparatus according to claim 3 wherein the biasing member (115) has a first portion and a second portion;
wherein the first portion of the biasing member is operatively coupled to the first brake arm (111) so that the first brake shoe mounting portion of the first brake arm is biased in a selected direction; and
wherein the second portion of the biasing member is coupled to a pivot axle of the second brake arm (112).

5. The bicycle braking device according to claim 1, wherein the second brake arm (112) further comprises a second cable mounting portion (112c).

6. The bicycle braking device according to claim 5, wherein both the first cable mounting portion (111c) and the second cable mounting portion (112c) are disposed on a same side as one of the first brake shoe mounting portion (111b) and the second brake shoe mounting portion (112b).

7. The bicycle braking device according to any one of claims 1 to 6, wherein the communicating member (116) has
a first link portion (131) provided in the first brake arm (111), and
a second link portion (132) provided in the second brake arm (112) and contactable with the first link portion.

8. The bicycle braking device according to claim 7, wherein the communicating member (116) has a roller (133) provided in one of the first link portion and the second link portion and contacting the other of the first link portion and the second link portion.

9. The bicycle braking device according to claim 8, wherein the communicating member (116) has a contact portion (111h) provided in the other of the first link portion and the second link portion and contactable with the roller.

10. The bicycle braking device according to any one of claims 1 to 9, wherein the second brake arm (112) has a second brake arm body (123), and a second link member (124) having the second link portion, and
the bicycle braking device further comprises an adjustment portion (117) which adjusts a relative position between the second brake arm body and the second link member.

11. The bicycle braking device according to any one of claims 1 to 10, wherein the first brake arm (111) and the second brake arm (112) are mountable to a bicycle chain stay.

12. The bicycle braking device according to any one of claims 1 to 8, further comprising an adapter having
a first fixing portion to which the first mounting portion is fixable,
a second fixing portion to which the second mounting portion is fixable, and
a third fixing portion disposed between the first fixing portion and the second fixing portion and fixable to the bicycle frame.

## Patentansprüche

1. Fahrradbremsvorrichtung, umfassend:
einen ersten Bremsarm (111) mit einem ersten Montageabschnitt (111a), schwenkbar montierbar an einen Fahrradrahmen, einem ersten Bremsbackenmontageabschnitt (111b), an welchem eine erste Bremsbacke montiert ist, und einem ersten Kabelmontageabschnitt (111c), an welchem ein Bremsbetätigungskabel montiert ist;
einen zweiten Bremsarm (112) mit einem zweiten Montageabschnitt (112a), schwenkbar montierbar an den Fahrradrahmen, und einem zweiten Bremsbackenmontageabschnitt (112b), an welchem eine zweite Bremsbacke montiert ist;
ein Vorspannglied (115), den ersten Bremsarm (111) und den zweiten Bremsarm (112) in eine Richtung vorspannend, in welcher der erste Bremsbackenmontageabschnitt und der zweite Bremsbackenmontageabschnitt voneinander beabstandet oder getrennt sind, wobei das Vorspannglied (115) eine Spiralfeder ist; und
ein Kommunikationsglied (116), welches es dem ersten Bremsarm und dem zweiten Bremsarm ermöglicht, synchronisiert zu schwenken,
einen Vorspannkrafteinstellmechanismus (119), bereitgestellt an zumindest einem von dem ersten Abschnitt und dem zweiten Abschnitt des Vorspanngliedes zum Einstellen der Vorspannkraft des Vorspanngliedes,
wobei der Vorspannkrafteinstellmechanismus (119) über ein Vorspannkrafteinstellglied (137) verfiigt, drehbar gestützt durch zumindest einen von dem ersten Bremsarm und dem zweiten Bremsarm und über eine Spiralfederhalterille (137a), wobei die Spiralfeder (115) entlang der Federhalterille gehalten ist/wird,
**dadurch gekennzeichnet, dass** der Vorspannkrafteinstellmechanismus (119) die Vorspannkraft einstellt durch Drehen des Vorspannkrafteinstellgliedes (137) und somit Bewegen der Spiralfeder (115) entlang der Federhalterille (137a) mit Bezug auf das Vorspannkrafteinstellglied.

2. Vorrichtung nach Anspruch 1, bei welcher das Vorspannglied (115) über einen ersten Abschnitt und einen zweiten Abschnitt verfügt;
wobei der erste Abschnitt des Vorspanngliedes (115) wirkgekoppelt ist mit dem ersten Bremsarm (111) und der zweite Abschnitt des Vorspanngliedes wirkgekoppelt ist mit dem zweiten Bremsarm (112).

3. Vorrichtung nach Anspruch 1, bei welcher der erste Montageabschnitt (111a) ausgelegt ist zur Montage an dem Fahrradrahmen zum schwenken herum um eine erste Schwenkachse, und wobei der zweite Bremsarmmontageabschnitt (112a) ausgelegt ist zur Montage an den Fahrradrahmen zum Schwenken herum um eine zweite Schwenkachse.

4. Vorrichtung nach Anspruch 3, bei welcher das Vorspannglied (115) über einen ersten Abschnitt und über einen zweiten Abschnitt verfügt;
wobei der erste Abschnitt des Vorspanngliedes wirkgekoppelt ist mit dem ersten Bremsarm (111), so dass der erste Bremsbackenmontageabschnitt des ersten Bremsarmes in eine gewählten Richtung vorgespannt ist/wird; und
wobei der zweite Abschnitt des Vorspanngliedes mit einer Schwenkachse des zweiten Bremsarmes (112) gekoppelt ist.

5. Fahrradbremsvorrichtung nach Anspruch 1, bei welcher der zweite Bremsarm (112) ferner einen zweiten Kabelmontageabschnitt (112c) umfasst.

6. Fahrradbremsvorrichtung nach Anspruch 5, bei welcher beide von dem ersten Kabelmontageabschnitt (111c) und dem zweiten Kabelmontageabschnitt (112c) an einer selben Seite angeordnet sind wie einer von dem ersten Bremsbackenmontageabschnitt (111b) und dem zweiten Bremsbackenmontageabschnitt (112b).

7. Fahrradbremsvorrichtung nach einem der Ansprüche 1 bis 6, bei welcher das Kommunikationsglied (116) aufweist
einen ersten Kopplungsabschnitt (131), bereitgestellt in dem ersten Bremsarm (111), und
einen zweiten Kopplungsabschnitt (132), bereitgestellt in dem zweiten Bremsarm (112) und verbindbar mit dem ersten Kopplungs- oder Verbindabschnitt.

8. Fahrradbremsvorrichtung nach Anspruch 7, bei welcher das Kommunikationsglied (116) über eine Walze (133) verfügt, bereitgestellt in einem von dem ersten Kopplungs- oder Verbindabschnitt und dem zweiten Kopplungs- oder Verbindabschnitt und den anderen von dem ersten Verbind- oder Kopplungsabschnitt und dem zweiten Verbind- oder Kopplungsabschnitt berührend.

9. Fahrradbremsvorrichtung nach Anspruch 8, bei welcher das Kommunikationsglied (116) über einen Kontaktabschnitt (111h) verfügt, bereitgestellt in dem anderen von dem ersten Kopplungs- oder Verbindabschnitt und dem zweiten Kopplungs- oder Verbindabschnitt und verbindbar oder kontaktierbar bzw. in Berührung bringbar mit der Walze oder Rolle.

10. Fahrradbremsvorrichtung nach einem der Ansprüche 1 bis 9, bei welchem der zweite Bremsarm (112) über einen zweiten Bremsarmkörper (123) und ein zweites Kopplungs- oder Verbindglied (124) mit dem zweiten Kopplungs- oder Verbindabschnitt verfügt, und
die Fahrradbremsvorrichtung ferner einen Einstellabschnitt (117) umfasst, welcher eine Relativposition einstellt zwischen dem zweiten Bremsarmkörper und dem zweiten Kopplungs- oder Verbindglied.

11. Fahrradbremsvorrichtung gemäß einem der Ansprüche 1 bis 10, bei welcher der erste Bremsarm (111) und der zweite Bremsarm (112) an einer Fahrradkettenstrebe (chain stay) montierbar sind.

12. Fahrradbremsvorrichtung gemäß einem der Ansprüche 1 bis 8, ferner umfassend einen Adapter mit
einem ersten Fixierabschnitt, an welchem der erste Montageabschnitt fixierbar ist, einem zweiten Fixierabschnitt, an welchem der zweite Montagabschnitt fixierbar ist, und
einem dritten Fixierabschnitt, angeordnet zwischen dem ersten Fixierabschnitt und dem zweiten Fixierabschnitt und fixierbar an dem Fahrradrahmen.

## Revendications

1. Dispositif de freinage de bicyclette comprenant:
un premier bras de frein (111) ayant une première partie de montage (111a) qui peut être monté pivotante à un cadre de bicyclette, une première partie de montage de porte patin (111b) à laquelle un premier patin de frein est monté, et une première partie de montage de câble (111c) à laquelle un câble d'actionnement de frein est monté,
un deuxième bras de frein (112) ayant une deuxième partie de montage (112a) qui peut être montée pivotante à un cadre de bicyclette, et une deuxième partie de montage de porte patin (112b) à laquelle un deuxième porte patin est monté ;
un élément de rappel (115) rappelant le premier bras de frein (111) et le deuxième bras de frein (112) dans une direction dans laquelle la première partie de montage de porte patin et la deuxième partie de montage de porte patin sont séparées l'une de l'autre, dans lequel l'élément de rappel (115) est un ressort hélicoïdal ; et
un élément de communication (116) qui permet au premier bras de frein et au deuxième bras de frein de pivoter de manière synchrone,
un élément d'ajustement de force de rappel (119) fourni sur au moins l'une parmi la première partie et la deuxième partie de l'élément de rappel pour ajuster une force de rappel de l'élément de rappel,
dans lequel le mécanisme d'ajustement de force de rappel (119) a un élément d'ajustement de force de rappel (137) supporté en rotation par au moins l'un du premier bras de frein et du deuxième bras de frein, et a une rainure de maintien (137a) de ressort hélicoïdal, dans lequel le ressort hélicoïdal (115) est maintenu le long de la rainure de maintien de ressort, **caractérisé en ce que**
le mécanisme d'ajustement de force de rappel (119) ajuste la force de rappel en tournant l'élément d'ajustement de force de rappel (137) et en déplaçant ainsi le ressort hélicoïdal (115) le long de la rainure de maintien (137a) de ressort par rapport à l'élément d'ajustement de force de rappel.

2. Dispositif selon la revendication 1, dans lequel l'élément de rappel (115) a une première partie et une deuxième partie ;
dans lequel la première partie de l'élément de rappel (115) est couplée fonctionnellement au premier bras de frein (111) et la deuxième partie de l'élément de rappel est couplée fonctionnellement au deuxième bras de frein (112).

3. Dispositif selon la revendication 1, dans lequel la première partie de montage (111a) est adaptée pour un montage au cadre de bicyclette pour pivoter par rapport à un premier axe pivot, et dans lequel la deuxième partie de montage (112a) de bras de frein est adaptée pour un montage au cadre de bicyclette pour pivoter par rapport à un deuxième axe pivot.

4. Dispositif selon la revendication 3, dans lequel l'élément de rappel (115) a une première partie et une deuxième partie ;
dans lequel la première partie de l'élément de rappel est couplée fonctionnellement au premier bras de frein (111) de sorte que la première partie de montage de porte patin du premier bras de frein est rappelé dans une direction choisie, et
dans lequel la deuxième partie de l'élément de rappel est couplée à un axe pivot du deuxième bras de frein (112).

5. Dispositif de freinage de bicyclette selon la revendication 1, dans lequel le deuxième bras de frein (112) comprend en outre une deuxième partie de montage de câble (112c).

6. Dispositif de freinage de bicyclette selon la revendication 5, dans lequel les deux parmi la première partie de montage de câble (111 c) et la deuxième partie de montage de câble (112c) sont disposées d'un même côté que l'une parmi la première partie de montage de porte patin (111b) et la deuxième partie de montage de porte patin (112b).

7. Dispositif de freinage de bicyclette selon l'une quelconque des revendications 1 à 6, dans lequel l'élément de communication (116) a une première partie de liaison (131) fournie dans le premier bras de frein (111), et une deuxième partie de liaison (132) fournie dans le deuxième bras de frein (112) et pouvant être en contact avec la première partie de liaison.

8. Dispositif de freinage de bicyclette selon la revendication 7, dans lequel l'élément de communication (116) a un rouleau (133) fourni dans l'une parmi la première partie de liaison et la deuxième partie de liaison, et qui est en contact avec l'autre parmi la première partie de liaison et la deuxième partie de liaison.

9. Dispositif de freinage de bicyclette selon la revendication 8, dans lequel l'élément de communication (116) a une partie de contact (111h) fournie dans l'autre parmi la première partie de liaison et la deuxième partie de liaison et pouvant être en contact avec le rouleau.

10. Dispositif de freinage de bicyclette selon l'une quelconque des revendications 1 à 9, dans lequel le deuxième bras de frein (112) a un corps de deuxième bras de frein (123), et un deuxième élément de liaison (124) ayant la deuxième partie de liaison, et le dispositif de freinage de bicyclette comprend en outre une partie d'ajustement (117) qui ajuste une position relative entre le corps de deuxième bras de frein et le deuxième élément de liaison.

11. Dispositif de freinage de bicyclette selon l'une quelconque des revendications 1 à 10, dans lequel le premier bras de frein (111) et le deuxième bras de frein (112) peuvent être montés sur une base de fourche arrière de bicyclette.

12. Dispositif de freinage de bicyclette selon l'une quelconque des revendications 1 à 8, comprenant en outre un adaptateur ayant
une première partie de fixation à laquelle la première partie de montage peut être fixée,
une deuxième partie de fixation à laquelle la deuxième partie de montage peut être fixée, et
une troisième partie de fixation disposée entre la première partie de fixation et la deuxième partie de fixation et pouvant être fixée au cadre de bicyclette.
